# EUROPEAN PATENT APPLICATION

(11) **EP 4 099 630 A1**
(43) Date of publication of application: **07.12.2022**
(21) Application number: 20920543.4
(22) Date of filing: 09.11.2020
(51) Int. Cl.: H04L 12/24, H04L 5/00

(54) **COMMUNICATION METHOD AND COMMUNICATION APPARATUS**

(30) Priority: 21.02.2020 CN 202010108821
(71) Applicant: Huawei Technologies Co., Ltd., Longgang District Shenzhen, Guangdong 518129 (CN)
(72) Inventor: KUANG, Yiru, Shenzhen, Guangdong 518129 (CN); XU, Haibo, Shenzhen, Guangdong 518129 (CN)
(74) Representative: Grünecker Patent- und Rechtsanwälte PartG mbB
(86) International application number: PCT/CN2020/127535
(87) International publication number: WO 2021/164331

(57) **Abstract**

This application provides a communication method and a communications apparatus. In embodiments of this application, an SN sends, to an MN, first information used to indicate that a terminal device is allowed to report overheating assistance information related to the SN, so that the MN can configure, based on the first information, the terminal device to be able to report overheating assistance information related to the SN. In this way, that the terminal device is allowed to report overheating assistance information related to the SN is determined by the SN or is determined based on a requirement of the SN. This further helps reduce or prevent the terminal device from reporting overheating assistance information related to the SN in vain, helps save air interface resources of the MN and resources of a link between the MN and the SN, and reduces signaling overheads. In addition, the SN may further send, to the MN, third information used to indicate that the terminal device is not allowed to report overheating assistance information related to the SN, so that the MN configures, based on the third information, the terminal device to be unable to report overheating assistance information related to the SN.

## Description

This application claims priority to Chinese Patent Application No. 202010108821.2, filed with the China National Intellectual Property Administration on February 21, 2020 and entitled "COMMUNICATION METHOD AND COMMUNICATIONS APPARATUS", which is incorporated herein by reference in its entirety.

### TECHNICAL FIELD

This application relates to the communication field, and more specifically, to a communication method and a communications apparatus.

### BACKGROUND

When a terminal device performs communication by using a high capability (for example, multiple carriers, a large bandwidth, or a high multi-input multi-output (multi-input multi-output, MIMO) layer (layer) quantity), for example, when the terminal device performs a real-time battle game, performs navigation by using a global positioning system (global positioning system, GPS), makes a high-definition video call, or the like, to support the foregoing communication service, high power consumption is generated in the terminal device, and consequently a temperature of the terminal device is increased. When the temperature of the terminal device is increased to a specific value (for example, 40 degrees), it may be considered that an overheating problem occurs on the terminal device. When a device overheating problem occurs on the terminal device, a user may perceive that the device is overheated when using the terminal device (for example, a mobile phone). As a result, user experience is poor. When the device overheating problem occurs on the terminal device, a capability or a configuration of the terminal device may be lowered to implement temperature reduction, so as to resolve the overheating problem of the terminal device. In this case, the terminal device may report assistance information (UE assistance information) to notify a network device (for example, a base station) of a capability or a configuration that the terminal device expects to lower, so that the network device can consider the information during reconfiguration.

In a scenario in which the terminal device is simultaneously connected to network devices using two different access technologies, that is, in a multi-access technology dual connectivity (multi-RAT dual connectivity, MR-DC) scenario, when the terminal device needs to report, to a secondary node (secondary node, SN), overheating assistance information related to the SN, the terminal device needs to first send the overheating assistance information to a master node (master node, MN) in a network, and then the MN forwards the overheating assistance information to the SN. In this process, the MN does not need to modify the overheating assistance information related to the SN or even may not perceive the overheating assistance information related to the SN, and the overheating assistance information related to the SN is mainly used by the SN.

However, in the MR-DC scenario, the MN has a main decision-making right. Therefore, without considering a requirement of the SN, the MN configures, by using an RRC connection reconfiguration message of the MN, the terminal device to be able to send overheating assistance information related to the SN. Therefore, how to flexibly configure the overheating assistance information related to the SN is an urgent problem to be resolved.

### SUMMARY

This application provides a communication method and a communications apparatus. According to this application, that a terminal device is allowed to report overheating assistance information related to an SN can be determined by the SN or be determined based on a requirement of the SN.

According to a first aspect, a communication method is provided. In the method, a secondary node SN determines first information, where the first information is used to indicate that a terminal device is allowed to report overheating assistance information related to the SN. Then, the SN sends the first information to a master node MN

Therefore, in this embodiment of this application, the SN sends, to the MN, the first information used to indicate that the terminal device is allowed to report overheating assistance information related to the SN, so that the MN can configure, based on the first information, the terminal device to be able to report, to the SN, overheating assistance information related to the SN. In this way, that the terminal device is allowed to report overheating assistance information related to the SN is determined by the SN or is determined based on the requirement of the SN. This further helps reduce or prevent the terminal device from reporting overheating assistance information related to the SN in vain, helps save air interface resources of the MN and resources of a link between the MN and the SN, and reduces signaling overheads.

In a first implementation, whether the terminal device is allowed to report overheating assistance information related to the SN may be indicated based on whether the first information exists. For example, if the first information exists, that is, the SN sends the first information to the MN, it indicates that the terminal device is allowed to report overheating assistance information related to the SN. If the first information does not exist, that is, the SN does not send the first information to the MN, it indicates that the terminal device is not allowed to report the overheating-related assistance information related to the SN.

In a second implementation, whether the terminal device is allowed to report overheating assistance information related to the SN may be determined based on a value of the first information. For example, when the first information is set to a first value (for example, setup), it indicates that the terminal device is allowed to report overheating assistance information related to the SN; or when the first information is set to a second value (for example, release), it indicates that the terminal device is not allowed to report overheating assistance information related to the SN.

In a third implementation, two types of information (for example, the first information and third information) may be further used to indicate whether the terminal device is allowed to report overheating assistance information related to the SN. For example, the first information may be set to a first value (for example, setup), to indicate that the terminal device is allowed to report overheating assistance information related to the SN, and the third information may be set to a second value (for example, release), to indicate that the terminal device is not allowed to report the overheating-related assistance information related to the SN.

With reference to the first aspect, in some implementations of the first aspect, the first information further includes time of a prohibit timer corresponding to overheating assistance information related to the SN.

The prohibit timer is started after the terminal device reports overheating assistance information related to the SN, and during running of the prohibit timer, the terminal device is prohibited from reporting overheating assistance information related to the SN.

As an example, the value of the prohibit timer may be set with reference to an existing protocol. For example, a value of the overheating prohibit timer specified in the existing protocol may be {s0, s0dot5, s1, s2, s5, s10, s20, s30, s60, s90, s120, s300, s600, spare3, spare2, spare1}, where s indicates that the unit is second.

In this way, the prohibit timer can be used to control a frequency at which the terminal device reports overheating assistance information.

With reference to the first aspect, in some implementations of the first aspect, before determining the first information, the secondary node SN may further receive second information from the MN, where the second information is used to indicate that the terminal device has a capability of supporting reporting of overheating assistance information related to the SN. In this way, after receiving the second information, the SN may determine the first information based on the second information. That is, the SN determines the first information based on a fact that the terminal device has a capability of supporting reporting of overheating assistance information related to the SN.

In some possible implementations, when the terminal device does not send the second information, it may be considered that the terminal device does not have the capability of supporting reporting of overheating assistance information related to the SN. In other words, when the SN does not receive the second information, the SN may consider that the terminal device does not have the capability of reporting overheating assistance information related to the SN.

In some possible implementations, when the second information is set to a first value (for example, setup), it indicates that the terminal device has the capability of supporting reporting of overheating assistance information related to the SN; or when the first information is set to a second value (for example, release), it indicates that the terminal device does not have the capability of supporting reporting of overheating assistance information related to the SN.

With reference to the first aspect, in some implementations of the first aspect, after sending the first information to the master node MN, the SN may further send third information to the MN, where the third information is used to indicate that the terminal device is not allowed to report overheating assistance information related to the SN.

In a possible case, after the SN requests to configure that the terminal device is allowed to report overheating assistance information related to the SN, the SN may request the MN to release the overheating configuration information related to the SN (for example, first configuration information). In other words, the third information may be used to indicate the MN to release the first configuration information.

Therefore, in this embodiment of this application, when the SN does not allow the terminal device to report overheating assistance information related to the SN, or when the SN no longer wants the terminal device to send overheating assistance information related to the SN, the SN may send, to the MN, the third information used to indicate that the terminal device is not allowed to send overheating assistance information related to the SN, so that the MN can configure, based on the third information, that the terminal device does not report, to the SN, overheating assistance information related to the SN. In this way, that the terminal device is not allowed to report overheating assistance information related to the SN is determined by the SN or is determined based on the requirement of the SN. This further helps reduce or prevent the terminal device from reporting overheating assistance information related to the SN in vain, helps save air interface resources of the MN and resources of a link between the MN and the SN, and reduces signaling overheads.

With reference to the first aspect, in some implementations of the first aspect, before determining the first information, the secondary node SN may further receive fourth information from the MN, where the fourth information is used to indicate that the terminal device is allowed to report overheating assistance information related to the SN. The SN may determine the first information based on the fourth information.

Therefore, in this embodiment of this application, the MN indicates, to the SN, current overheating configuration information related to the SN, so that the SN determines, based on the fourth information, whether to update a configuration for allowing the terminal device to report overheating assistance information related to the SN, so that the SN negotiates with the MN to determine whether the terminal device is allowed to report overheating assistance information related to the SN. In this way, whether the terminal device is allowed to report overheating assistance information related to the SN is determined by the SN or is determined based on a requirement of the SN. This further helps reduce or prevent the terminal device from reporting overheating assistance information related to the SN in vain, helps save air interface resources of the MN and resources of a link between the MN and the SN, and reduces signaling overheads.

With reference to the first aspect, in some implementations of the first aspect, the SN is a first SN, and the fourth information is determined based on whether a second SN allows the terminal device to report overheating assistance information related to the SN; and the second SN is an SN that has been released before the MN adds the first SN.

Specifically, in this embodiment of this application, after the MN releases the second SN, there may be a case in which a requirement of the second SN is the same as a requirement of a new SN (that is, the first SN). In this case, the first configuration information of the second SN can continue to be used in the new SN. The original first configuration information may be directly restored to use, and reconfiguration of first configuration information is not required, so that signaling overheads can be reduced. In this case, the MN may send the fourth information to the first SN, to indicate that, based on a configuration status of the second SN, the terminal device is currently allowed to report overheating assistance information related to the SN, so that the SN determines, based on the fourth information, whether to update a configuration for allowing the terminal device to report overheating assistance information related to the SN.

With reference to the first aspect, in some implementations of the first aspect, the fourth information is further used to indicate time of a prohibit timer corresponding to overheating assistance information related to the SN.

With reference to the first aspect, in some implementations of the first aspect, the overheating assistance information related to the SN includes at least one of a maximum quantity of uplink carriers, a maximum quantity of uplink cells, a maximum quantity of downlink carriers, a maximum quantity of downlink cells, a maximum uplink aggregated bandwidth in a first frequency band, a maximum downlink aggregated bandwidth in the first frequency band, a maximum quantity of uplink MIMO layers of a serving cell on the first frequency band, and a maximum quantity of downlink MIMO layers of a serving cell on the first frequency band that are of the terminal device under the SN.

The quantity of carriers includes a quantity of primary SCG carriers and/or a quantity of secondary carriers, the quantity of cells includes a quantity of primary SCG cells and/or a quantity of secondary cells, and the first frequency band includes a low-frequency FR1 frequency band and/or a high-frequency FR2 frequency band.

According to a second aspect, a communication method is provided. In the method, a master node MN receives first information from a secondary node SN, where the first information is used to indicate that a terminal device is allowed to report overheating assistance information related to the SN. Then, the MN sends first configuration information to the terminal device based on the first information, where the first configuration information is used to indicate that the terminal device is allowed to report, to the SN, overheating assistance information related to the SN.

Therefore, in this embodiment of this application, the SN sends, to the MN, the first information used to indicate that the terminal device is allowed to report overheating assistance information related to the SN, so that the MN can configure, based on the first information, the terminal device to be able to report, to the SN, overheating assistance information related to the SN. In this way, that the terminal device is allowed to report overheating assistance information related to the SN is determined by the SN or is determined based on the requirement of the SN. This further helps reduce or prevent the terminal device from reporting overheating assistance information related to the SN in vain, helps save air interface resources of the MN and resources of a link between the MN and the SN, and reduces signaling overheads.

In a first implementation, whether the terminal device is allowed to report overheating assistance information related to the SN may be indicated based on whether the first information exists. For example, if the first information exists, that is, the SN sends the first information to the MN, it indicates that the terminal device is allowed to report overheating assistance information related to the SN. If the first information does not exist, that is, the SN does not send the first information to the MN, it indicates that the terminal device is not allowed to report the overheating-related assistance information related to the SN.

In a second implementation, whether the terminal device is allowed to report overheating assistance information related to the SN may be determined based on a value of the first information. For example, when the first information is set to a first value (for example, setup), it indicates that the terminal device is allowed to report overheating assistance information related to the SN; or when the first information is set to a second value (for example, release), it indicates that the terminal device is not allowed to report overheating assistance information related to the SN.

In a third implementation, two types of information (for example, the first information and third information) may be further used to indicate whether the terminal device is allowed to report overheating assistance information related to the SN. For example, the first information may be set to a first value (for example, setup), to indicate that the terminal device is allowed to report overheating assistance information related to the SN, and the third information may be set to a second value (for example, release), to indicate that the terminal device is not allowed to report the overheating-related assistance information related to the SN.

With reference to the second aspect, in some implementations of the second aspect, the first information or the first configuration information further includes time of a prohibit timer corresponding to overheating assistance information related to the SN.

The prohibit timer is started after the terminal device reports overheating assistance information related to the SN, and during running of the prohibit timer, the terminal device is prohibited from reporting overheating assistance information related to the SN.

As an example, the value of the prohibit timer may be set with reference to an existing protocol. For example, a value of the overheating prohibit timer specified in the existing protocol may be {s0, s0dot5, s1, s2, s5, s10, s20, s30, s60, s90, s120, s300, s600, spare3, spare2, spare1}, where s indicates that the unit is second.

In this way, the prohibit timer can be used to control a frequency at which the terminal device reports overheating assistance information.

With reference to the second aspect, in some implementations of the second aspect, before receiving the first information from the secondary node SN, the master node MN may further send second information to the SN, where the second information is used to indicate that the terminal device has a capability of supporting reporting of overheating assistance information related to the SN, so that the SN can determine the first information based on a fact that the terminal device has a capability of supporting reporting of overheating assistance information related to the SN.

In some optional embodiments, when the second information is set to a first value (for example, setup), it indicates that the terminal device has the capability of supporting reporting of overheating assistance information related to the SN; or when the first information is set to a second value (for example, release), it indicates that the terminal device does not have the capability of supporting reporting of overheating assistance information related to the SN.

With reference to the second aspect, in some implementations of the second aspect, after receiving the first information from the secondary node SN, the master node MN may further receive third information from the SN, where the third information is used to indicate that the terminal device is not allowed to report overheating assistance information related to the SN. Then the MN sends second configuration information to the terminal device based on the third information, where the second configuration information is used to indicate that the terminal device is not allowed to report overheating assistance information related to the SN.

In a possible case, after the SN requests to configure that the terminal device is allowed to report overheating assistance information related to the SN, the SN may request the MN to release the overheating configuration information related to the SN (for example, first configuration information). In other words, the third information may be used to indicate the MN to release the first configuration information, that is, the second configuration information is used to release the first configuration information.

Therefore, in this embodiment of this application, when the SN does not allow the terminal device to report overheating assistance information related to the SN, or when the SN no longer wants the terminal device to send overheating assistance information related to the SN, the SN may send, to the MN, the third information used to indicate that the terminal device is not allowed to send overheating assistance information related to the SN, so that the MN can configure, based on the third information, that the terminal device does not report, to the SN, overheating assistance information related to the SN. In this way, that the terminal device is not allowed to report overheating assistance information related to the SN is determined by the SN or is determined based on the requirement of the SN. This further helps reduce or prevent the terminal device from reporting overheating assistance information related to the SN in vain, helps save air interface resources of the MN and resources of a link between the MN and the SN, and reduces signaling overheads.

With reference to the second aspect, in some implementations of the second aspect, before receiving the first information from the secondary node SN, the master node MN may further send fourth information to the SN, where the fourth information is used to indicate that the terminal device is allowed to report overheating assistance information related to the SN.

Therefore, in this embodiment of this application, the MN indicates, to the SN, current overheating configuration information related to the SN, so that the SN determines, based on the fourth information, whether to update a configuration for allowing the terminal device to report overheating assistance information related to the SN, so that the SN negotiates with the MN to determine whether the terminal device is allowed to report overheating assistance information related to the SN. In this way, whether the terminal device is allowed to report overheating assistance information related to the SN is determined by the SN or is determined based on a requirement of the SN. This further helps reduce or prevent the terminal device from reporting overheating assistance information related to the SN in vain, helps save air interface resources of the MN and resources of a link between the MN and the SN, and reduces signaling overheads.

With reference to the second aspect, in some implementations of the second aspect, the SN is a first SN, and the fourth information is determined based on whether a second SN allows the terminal device to report overheating assistance information related to the SN; and the second SN is an SN that has been released before the MN adds the first SN.

Specifically, in this embodiment of this application, after the MN releases the second SN, there may be a case in which a requirement of the second SN is the same as a requirement of a new SN (that is, the first SN). In this case, the first configuration information of the second SN can continue to be used in the new SN. The original first configuration information may be directly restored to use, and reconfiguration of first configuration information is not required, so that signaling overheads can be reduced. In this case, the MN may send the fourth information to the first SN, to indicate that, based on a configuration status of the second SN, the terminal device is currently allowed to report overheating assistance information related to the SN, so that the SN determines, based on the fourth information, whether to update a configuration for allowing the terminal device to report overheating assistance information related to the SN.

With reference to the second aspect, in some implementations of the second aspect, the fourth information is further used to indicate time of a prohibit timer corresponding to overheating assistance information related to the SN.

With reference to the second aspect, in some implementations of the second aspect, the MN may further send fifth information to the terminal device, where the fifth information is used to indicate the terminal device to release the first configuration information when the MN releases the SN.

Because the SN is released (that is, the terminal device is disconnected from the SN), a corresponding configuration related to the SN should be released. This helps save storage space.

In a possible implementation, the fifth information may be the foregoing second configuration information. In other words, when the MN releases the SN, the MN sends the second configuration information to the terminal device, to release the first configuration information.

With reference to the second aspect, in some implementations of the second aspect, the overheating assistance information related to the SN includes at least one of a maximum quantity of uplink carriers, a maximum quantity of uplink cells, a maximum quantity of downlink carriers, a maximum quantity of downlink cells, a maximum uplink aggregated bandwidth in a first frequency band, a maximum downlink aggregated bandwidth in the first frequency band, a maximum quantity of uplink MIMO layers of a serving cell on the first frequency band, and a maximum quantity of downlink MIMO layers of a serving cell on the first frequency band that are of the terminal device under the SN.

The quantity of carriers includes a quantity of primary SCG carriers and/or a quantity of secondary carriers, the quantity of cells includes a quantity of primary SCG cells and/or a quantity of secondary cells, and the first frequency band includes a low-frequency FR1 frequency band and/or a high-frequency FR2 frequency band.

According to a third aspect, a communication method is provided. In the method, a terminal device receives first configuration information from a master node MN, where the first configuration information is used to indicate that the terminal device is allowed to report overheating assistance information related to an SN, the first configuration information is determined by the MN based on first information sent by the SN, and the first information is used to indicate that the terminal device is allowed to report overheating assistance information related to the SN. Then, the terminal device reports overheating assistance information related to the SN when the terminal device is overheated.

Therefore, in this embodiment of this application, the SN sends, to the MN, the first information used to indicate that the terminal device is allowed to report overheating assistance information related to the SN, so that the MN can configure, based on the first information, the terminal device to be able to report, to the SN, overheating assistance information related to the SN. In this way, that the terminal device is allowed to report overheating assistance information related to the SN is determined by the SN or is determined based on the requirement of the SN. This further helps reduce or prevent the terminal device from reporting overheating assistance information related to the SN in vain, helps save air interface resources of the MN and resources of a link between the MN and the SN, and reduces signaling overheads.

With reference to the third aspect, in some implementations of the third aspect, the first information or the first configuration information further includes time of a prohibit timer corresponding to overheating assistance information related to the SN.

The prohibit timer is started after the terminal device reports the overheating assistance information related to the SN, and during running of the prohibit timer, the terminal device is prohibited from reporting overheating assistance information related to the SN.

In this way, the prohibit timer can be used to control a frequency at which the terminal device reports overheating assistance information.

With reference to the third aspect, in some implementations of the third aspect, second configuration information may be further received from the MN. The second configuration information is used to indicate that the terminal device is not allowed to report overheating assistance information related to the SN, the second configuration information is determined by the MN based on third information sent by the SN, and the third information is used to indicate that the terminal device is not allowed to report overheating assistance information related to the SN.

Therefore, in this embodiment of this application, when the SN does not allow the terminal device to report overheating assistance information related to the SN, or when the SN no longer wants the terminal device to send overheating assistance information related to the SN, the SN may send, to the MN, the third information used to indicate that the terminal device is not allowed to send overheating assistance information related to the SN, so that the MN can configure, based on the third information, that the terminal device does not report, to the SN, overheating assistance information related to the SN. In this way, that the terminal device is not allowed to report overheating assistance information related to the SN is determined by the SN or is determined based on the requirement of the SN. This further helps reduce or prevent the terminal device from reporting overheating assistance information related to the SN in vain, helps save air interface resources of the MN and resources of a link between the MN and the SN, and reduces signaling overheads.

With reference to the third aspect, in some implementations of the third aspect, fifth information may be further received from the MN, where the fifth information is used to indicate the terminal device to release the first configuration information when the MN releases the SN.

Because the SN is released (that is, the terminal device is disconnected from the SN), a corresponding configuration related to the SN should be released. This helps save storage space.

In a possible implementation, the fifth information may be the foregoing second configuration information. In other words, when the MN releases the SN, the MN sends the second configuration information to the terminal device, to release the first configuration information.

With reference to the third aspect, in some implementations of the third aspect, third configuration information may be further received from the MN, where the third configuration information is used to indicate that the MN releases the SN.

After the third configuration information is received from the MN, the first configuration information is released.

Because the SN is released (that is, the terminal device is disconnected from the SN), a corresponding configuration related to the SN should be released. This helps save storage space. In addition, the first configuration information can be released through implicit indication by sending the third configuration information. This helps reduce signaling overheads.

With reference to the third aspect, in some implementations of the third aspect, third configuration information may be further received from the MN, where the third configuration information is used to indicate that the MN releases the SN. After receiving the third configuration information from the MN, the terminal device determines to retain the first configuration information, and stops reporting overheating assistance information related to the SN.

For example, after an SN #1 is released, there may be a case in which a requirement of the SN #1 is the same as a requirement of a new SN. In this case, first configuration information of the original SN #1 can continue to be used in the new SN. The original first configuration information may be directly restored to use, and reconfiguration of first configuration information is not required, so that signaling overheads can be reduced.

With reference to the third aspect, in some implementations of the third aspect, after receiving the third configuration information from the MN, where the third configuration information is used to indicate that the MN releases the SN, the terminal device reports, when determining that the MN adds an SN, overheating assistance information related to the SN based on the first configuration information when the terminal device is overheated.

In other words, when the MN adds another SN (the SN may be, for example, the SN #1, or another SN), the terminal device may continue to report, to the newly-added SN based on previously-retained first configuration information (that is, the previously-retained first configuration information is restored), overheating assistance information related to the SN when the terminal device is overheated.

With reference to the third aspect, in some implementations of the third aspect, the overheating assistance information related to the SN includes at least one of a maximum quantity of uplink carriers, a maximum quantity of uplink cells, a maximum quantity of downlink carriers, a maximum quantity of downlink cells, a maximum uplink aggregated bandwidth in a first frequency band, a maximum downlink aggregated bandwidth in the first frequency band, a maximum quantity of uplink MIMO layers of a serving cell on the first frequency band, and a maximum quantity of downlink MIMO layers of a serving cell on the first frequency band that are of the terminal device under the SN.

The quantity of carriers includes a quantity of primary SCG carriers and/or a quantity of secondary carriers, the quantity of cells includes a quantity of primary SCG cells and/or a quantity of secondary cells, and the first frequency band includes a low-frequency FR1 frequency band and/or a high-frequency FR2 frequency band.

According to a fourth aspect, a communication method is provided. In the method, a terminal device receives first configuration information from a master node MN, where the first configuration information is used to indicate that the terminal device is allowed to report, to a secondary node SN, overheating assistance information related to the SN. Then, the terminal device receives fifth information from the MN, where the fifth information is used to indicate the terminal device to release the first configuration information when the MN releases the SN.

Because the SN is released (that is, the terminal device is disconnected from the SN), a corresponding configuration related to the SN should be released. This helps save storage space.

In a possible implementation, the fifth information may be the foregoing second configuration information. In other words, when the MN releases the SN, the MN sends the second configuration information to the terminal device, to release the first configuration information.

According to a sixth aspect, a communication method is provided. In the method, a terminal device receives first configuration information from a master node MN, where the first configuration information is used to indicate that the terminal device is allowed to report, to a secondary node SN, overheating assistance information related to the SN. Third configuration information is received from the MN, where the third configuration information is used to indicate that the MN releases the SN. After the third configuration information is received from the MN, the first configuration information is released.

Because the SN is released (that is, the terminal device is disconnected from the SN), a corresponding configuration related to the SN should be released. This helps save storage space. In addition, the first configuration information can be released through implicit indication by sending the third configuration information. This helps reduce signaling overheads.

According to a seventh aspect, a communication method is provided. In the method, a terminal device receives first configuration information from a master node MN, where the first configuration information is used to indicate that the terminal device is allowed to report, to a secondary node SN, overheating assistance information related to the SN. Then, the terminal device receives third configuration information from the MN, where the third configuration information is used to indicate that the MN releases the SN. After receiving the third configuration information from the MN, the terminal device determines to retain the first configuration information and stops reporting overheating assistance information related to the SN.

For example, after an SN #1 is released, there may be a case in which a requirement of the SN #1 is the same as a requirement of a new SN. In this case, first configuration information of the original SN #1 can continue to be used in the new SN. The original first configuration information may be directly restored to use, and reconfiguration of first configuration information is not required, so that signaling overheads can be reduced.

With reference to the seventh aspect, in some implementations of the seventh aspect, after receiving the third configuration information from the MN, where the third configuration information is used to indicate that the MN releases the SN, the terminal device reports, when determining that the MN adds an SN, overheating assistance information related to the SN based on the first configuration information when the terminal device is overheated.

In other words, when the MN adds another SN (the SN may be, for example, the SN #1, or another SN), the terminal device may continue to report, to the newly-added SN based on previously-retained first configuration information (that is, the previously-retained first configuration information is restored), overheating assistance information related to the SN when the terminal device is overheated.

According to an eighth aspect, a wireless communications apparatus is provided. The apparatus may be a secondary node, or may be a chip in the secondary node. The apparatus has a function of implementing various possible implementations of the first aspect. The function may be implemented by hardware, or may be implemented by hardware executing corresponding software. The hardware or the software includes one or more modules corresponding to the function.

In a possible design, the apparatus includes a transceiver module. Optionally, the apparatus further includes a processing module. The transceiver module may be, for example, at least one of a transceiver, a receiver, or a transmitter. The transceiver module may include a radio frequency circuit or an antenna. The processing module may be a processor. Optionally, the apparatus further includes a storage module, and the storage module may be, for example, a memory. When the storage module is included, the storage module is configured to store instructions. The processing module is connected to the storage module, and the processing module may execute the instruction stored in the storage module or instructions from others, so that the apparatus performs the method according to the first aspect and the various possible implementations.

In another possible design, when the apparatus is the chip, the chip includes a transceiver module. Optionally, the chip further includes a processing module. The transceiver module may be, for example, an input/output interface, a pin, or a circuit on the chip. The processing module may be, for example, a processor. The processing module may execute instructions, so that the chip in the apparatus performs the communication method according to any one of the first aspect and the possible implementations thereof. Optionally, the processing module may execute instructions in a storage module, and the storage module may be a storage module in the chip, for example, a register or a cache. The storage module may alternatively be located inside a communications device but outside the chip, for example, may be a read-only memory (read-only memory, ROM), another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the method according to the first aspect and the various possible implementations.

According to a ninth aspect, a wireless communications apparatus is provided. The apparatus may be a master node, or may be a chip in the master node. The apparatus has a function for implementing the second aspect and the possible implementations thereof. The function may be implemented by hardware, or may be implemented by hardware executing corresponding software. The hardware or the software includes one or more modules corresponding to the function.

In a possible design, the apparatus includes a transceiver module. Optionally, the apparatus further includes a processing module. The transceiver module may be, for example, at least one of a transceiver, a receiver, or a transmitter. The transceiver module may include a radio frequency circuit or an antenna. The processing module may be a processor. Optionally, the apparatus further includes a storage module, and the storage module may be, for example, a memory. When the storage module is included, the storage module is configured to store instructions. The processing module is connected to the storage module, and the processing module may execute the instruction stored in the storage module or instructions from others, so that the apparatus performs the communication method according to the second aspect and the various possible implementations.

In another possible design, when the apparatus is the chip, the chip includes a transceiver module. Optionally, the apparatus further includes a processing module. The transceiver module may be, for example, an input/output interface, a pin, or a circuit on the chip. The processing module may be, for example, a processor. The processing module may execute instructions, so that the chip in the apparatus performs the method according to any one of the second aspect and the possible implementations thereof. Optionally, the processing module may execute instructions in a storage module, and the storage module may be a storage module in the chip, for example, a register or a cache. The storage module may alternatively be located inside a communications device but outside the chip, for example, may be a read-only memory (read-only memory, ROM), another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution according to the second aspect and the various possible implementations.

According to a tenth aspect, a wireless communications apparatus is provided. The apparatus may be a terminal device, or may be a chip in the terminal device. The apparatus has a function of implementing the third aspect to the seventh aspect and the possible implementations of the third aspect to the possible implementations of the seventh aspect. The function may be implemented by hardware, or may be implemented by hardware executing corresponding software. The hardware or the software includes one or more modules corresponding to the function.

In a possible design, the apparatus includes a transceiver module. Optionally, the apparatus further includes a processing module. The transceiver module may be, for example, at least one of a transceiver, a receiver, or a transmitter. The transceiver module may include a radio frequency circuit or an antenna. The processing module may be a processor. Optionally, the apparatus further includes a storage module, and the storage module may be, for example, a memory. When the storage module is included, the storage module is configured to store instructions. The processing module is connected to the storage module, and the processing module may execute instructions stored in the storage module or other instructions, so that the apparatus performs the communication method according to the third aspect to the seventh aspect and the various possible implementations of the third aspect to the seventh aspect.

In another possible design, when the apparatus is the chip, the chip includes a transceiver module. Optionally, the apparatus further includes a processing module. The transceiver module may be, for example, an input/output interface, a pin, or a circuit on the chip. The processing module may be, for example, a processor. The processing module may execute instructions, so that the chip in the terminal performs the method according to any one of the third aspect to the seventh aspect and the possible implementations of the third aspect to the seventh aspect. Optionally, the processing module may execute instructions in a storage module, and the storage module may be a storage module in the chip, for example, a register or a cache. The storage module may alternatively be located inside a communications device but outside the chip, for example, may be a read-only memory (read-only memory, ROM), another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution according to the third aspect to the seventh aspect and the various possible implementations of the third aspect to the seventh aspect.

According to an eleventh aspect, a computer storage medium is provided. The computer storage medium stores program code, and the program code is used to indicate instructions for performing the method according to any one of the first aspect to the seventh aspect or the possible implementations of the first aspect to the seventh aspect.

According to a twelfth aspect, a computer program product including instructions is provided. When the computer program product runs on a computer, the computer performs the method according to any one of the first aspect to the seventh aspect or the possible implementations of the first aspect to the seventh aspect.

According to a thirteenth aspect, a communications system is provided. The communications system includes an apparatus that has a function of implementing the method and various possible designs according to the first aspect, an apparatus that has a function of implementing the method and various possible designs according to the second aspect, and an apparatus that has a function of implementing the method and various possible designs according to the third aspect.

According to a fourteenth aspect, a processor is provided, configured to be coupled to a memory, and the processor is configured to implement the method according to any one of the first aspect to the seventh aspect or the possible implementations of the first aspect to the seventh aspect.

According to a fifteenth aspect, a chip is provided, where the chip includes a processor and a communications interface, the communications interface is configured to communicate with an external component or an internal component, and the processor is configured to implement the method according to any one of the first aspect to the seventh aspect or the possible implementations of the first aspect to the seventh aspect.

Optionally, the chip may further include a memory. The memory stores the instructions. The processor is configured to execute the instructions stored in the memory or instructions from another module. When the instructions are executed, the processor is configured to implement the method according to any one of the first aspect, the second aspect, the third aspect, or the possible implementations thereof.

Optionally, the chip may be integrated into a master node, a secondary node, or a terminal device.

### BRIEF DESCRIPTION OF DRAWINGS

FIG. 1 is a schematic diagram of a network architecture to which an embodiment of this application is applied;
FIG. 2 is a schematic diagram of a network architecture to which an embodiment of this application is applied;
FIG. 3 is a schematic flowchart of a method for lowering a capability or a configuration of a terminal device;
FIG. 4 is a schematic flowchart of another method for lowering a capability or a configuration of a terminal device;
FIG. 5 is a schematic flowchart of a communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic diagram of a wireless communications apparatus according to an embodiment of this application;
FIG. 11 is a schematic diagram of another wireless communications apparatus according to an embodiment of this application;
FIG. 12 is a schematic diagram of another wireless communications apparatus according to an embodiment of this application;
FIG. 13 is a schematic diagram of a structure of a terminal device according to this application; and
FIG. 14 is a schematic diagram of a structure of a network device according to an embodiment of this application.

### DESCRIPTION OF EMBODIMENTS

The following describes technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS) system, a 5th generation (5th generation, 5G) system, or a new radio (new radio, NR) system.

A terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, examples of some terminals are a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), or the like. This is not limited in the embodiments of this application.

As an example instead of a limitation, in embodiments of this application, the terminal device may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is more than a hardware device. The wearable device implements powerful functions through software support, data exchange, and cloud interaction. In a broad sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, the terminal device in embodiments of this application may alternatively be a terminal device in an internet of things (internet of things, IoT) system. IoT is an important part of future information technology development. A main technical feature of the IoT is connecting things to networks using communication technologies, to implement an intelligent network for interconnection between persons and machines, and between things.

In addition, an access network device in the embodiments of this application may be a device configured to communicate with the terminal device. The access network device may also be referred to as an access device or a radio access network device, may be an evolved NodeB (evolved NodeB, eNB or eNodeB) in the LTE system, or may be a radio controller in a cloud radio access network (cloud radio access network, CRAN) scenario. Alternatively, the access network device may be a relay station, an access point, a vehicle-mounted device, a wearable device, an access network device in the 5G network, or an access network device in the future evolved PLMN network, may be an access point (access point, AP) in a WLAN, or may be a gNB in the new radio (new radio, NR) system. This is not limited in the embodiments of this application.

In addition, in this embodiment of this application, the access network device is a device in a RAN, in other words, is a RAN node that connects the terminal device to a wireless network. By way of example, and not limitation, the access network device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), a wireless fidelity (wireless fidelity, Wi-Fi) access point (access point, AP), or the like. In a network structure, the network device may include a centralized unit (centralized unit, CU) node or a distributed unit (distributed unit, DU) node, a RAN device including a CU node and a DU node, or a RAN device including a control plane CU node (CU-CP node), a user plane CU node (CU-UP node), and a DU node.

The access network device serves a cell. The terminal device communicates with the access network device by using a transmission resource (for example, a frequency domain resource or a spectrum resource) used for the cell. The cell may be a cell corresponding to the access network device (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), or the like. These small cells have features of small coverage and a low transmit power, and are suitable for providing a high-rate data transmission service.

In addition, a plurality of cells may simultaneously work in a same frequency band on a carrier in the LTE system or the 5G system. In some special scenarios, it may be considered that a concept of the carrier is equivalent to that of the cell. For example, in a carrier aggregation (carrier aggregation, CA) scenario, when a secondary carrier is configured for the terminal device, both a carrier index of the secondary carrier and a cell identification (cell identification, Cell ID) of a secondary cell working on the secondary carrier are carried. In this case, it may be considered that the concept of the carrier is equivalent to the concept of the cell. For example, that the terminal device accesses a carrier is equivalent to that the terminal device accesses a cell.

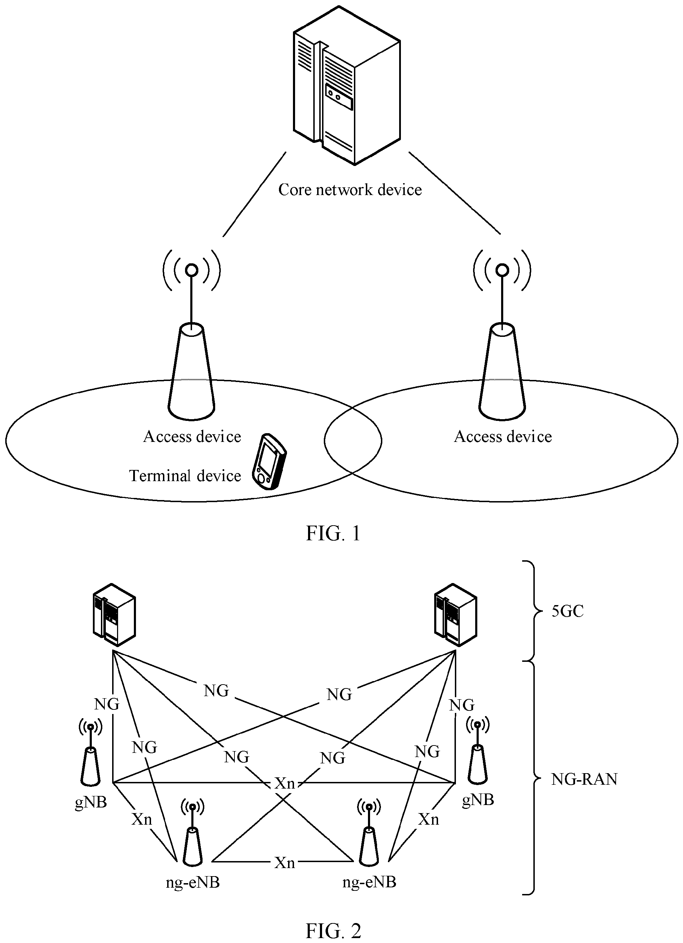

FIG. 1 is a schematic diagram of a network architecture to which an embodiment of this application is applied. As shown in FIG. 1, a terminal device may simultaneously perform dual-connectivity (dual-connectivity, DC) communication with two access network devices. In the two access network devices, one access network device that is responsible for exchanging a radio resource control message with the terminal device and is responsible for interacting with a core network control plane entity is a master mode (master node, MN), and the other radio access network device is a secondary node (secondary node, SN).

Similarly, the terminal device may alternatively have communication connections to a plurality of access network devices simultaneously and may send and receive data, which may be referred to as multi-connectivity or multi-connectivity (multi-connectivity, MC). In the plurality of access network devices, one access network device may be responsible for exchanging a radio resource control message with the terminal device, and is responsible for interacting with a core network control plane entity. In this case, the access network device may be referred to as an MN, and remaining access network devices may be referred to as SNs.

In embodiments of this application, the MN and the SN may be base stations of a same radio access type (radio access type, RAT), or may be base stations of different RATs.

Optionally, in an evolved structure, the access network device may include a centralized unit (centralized unit, CU) and a distributed unit (distributed unit, DU), and a plurality of DUs may be controlled by one CU. In some network architectures, signaling generated by the CU may be sent to the terminal device through the DU, or signaling generated by the terminal device may be sent to the CU through the DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario.

An apparatus in the following embodiments of this application may be located in the terminal device or the access network device based on a function implemented by the apparatus. When the foregoing CU-DU structure is used, the access network device may be the CU node, the DU node, or the RAN device including the CU node and the DU node.

FIG. 2 is a schematic diagram of a network architecture to which an embodiment of this application is applied. The network architecture is a 5G wireless communications system. As shown in FIG. 2, an overall architecture of the 5G wireless communications system (also referred to as a 5G system, a 5GS, a 5G system, or the like) includes a 5G core network (also referred to as a 5G Core, a 5GCN, or a 5GC) and an NG-RAN (also referred to as a 5G-RAN). The 5GC is a core network in the 5G wireless communications system, and the NG-RAN is a radio access network in the 5G wireless communications system.

In an implementation, as shown in FIG. 2, the NG-RAN includes two types of RAN nodes (RAN node): a gNB and an ng-eNB. The gNB provides terminations (Terminations) of user-plane and control-plane protocol stacks of new radio (new radio, NR) for the terminal device. The ng-eNB provides terminations of user-plane and control-plane protocol stacks of evolved universal terrestrial radio access (evolved universal terrestrial radio access, E-UTRA) for the terminal device. Data is transmitted between a core network device in the 5GC and an access network device (for example, the gNB or the ng-eNB) in the NG-RAN through an NG interface. Data may be transmitted between gNBs, between a gNB and an ng-eNB, and between ng-eNBs through Xn interfaces.

It should be noted that FIG. 2 is an example schematic diagram of a network architecture, but this embodiment of this application is not limited thereto. For example, the 5GC may further include more core network devices, and the NG-RAN may further include a base station using another access technology.

Three specific multiple radio access types dual connectivity (multiple RATs dual connectivity, MR-DC) architectures are defined in the 5G wireless communications system shown in FIG. 2. When an E-UTRA access network device (for example, a base station) is used as an MN, and an NR access network device (for example, a base station) is used as an SN, the scenario is specifically referred to as E-UTRA-NR dual connectivity (E-UTRA-NR Dual Connectivity, EN-DC) in MR-DC. When an NR access network device (for example, a base station) is used as an MN, and an E-UTRA access network device (for example, a base station) is used as an SN, the scenario is specifically referred to as NR-E-UTRA dual connectivity (NR-E-UTRA Dual Connectivity, NE-DC) in MR-DC. Similarly, when both an MN and an SN are NR access network devices (for example, base stations), the scenario is specifically referred to as NR-NR dual connectivity (NR-NR Dual Connectivity, NR-DC).

In addition, both an MN and an SN may alternatively be LTE access network devices (for example, base stations). It should be noted that, in the foregoing network architecture, data may be transmitted between the MN and the SN through a wired connection or a wireless connection. This is not limited in this embodiment of this application.

In this embodiment of this application, because the terminal device may simultaneously receive, under one access network device, services of a plurality of cells, the MN may include a master cell group (master cell group, MCG). Similarly, the SN may also include a secondary cell group (secondary cell group, SCG). However, this is not limited in this embodiment of this application.

When a device overheating problem occurs on the terminal device, a capability or a configuration of the terminal device may be lowered to implement temperature reduction, so as to resolve the overheating problem of the terminal device. For example, the access network device may send configuration information to the terminal device to lower the capability or the configuration of the terminal device.

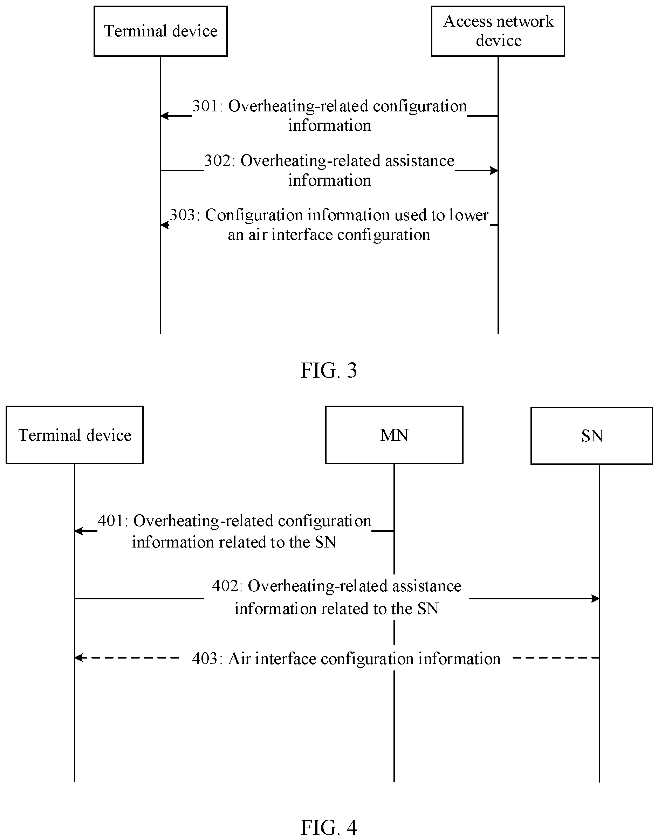

With reference to FIG. 3, the following describes a method for lowering a capability or a configuration of a terminal device in a scenario in which the terminal device is connected to one access network device. Refer to FIG. 3. The method includes steps 301 to 303.

301: The access network device sends overheating configuration information to the terminal device. The overheating configuration information is overheating-related configuration information. The overheating configuration information is used to indicate whether the terminal device sends overheating assistance information to the access network device, or is used to indicate whether the terminal device is allowed to report overheating assistance information to the access network device, or is used to configure that the terminal device reports overheating assistance information to the access network device when detecting that overheating occurs in the terminal device.

302: The terminal device sends overheating assistance information to the access network device.

For example, when the overheating configuration information in step 301 is used to indicate the terminal device to send overheating assistance information to the access network device, that is, when the access network device configures the terminal device to send overheating assistance information to the access network device, the terminal device may send the overheating assistance information to the access network device when an overheating problem occurs on the terminal device, and the overheating assistance information is used by the access network device to resolve the overheating problem of the terminal device based on the overheating assistance information.

In some optional embodiments, when the overheating configuration information in step 301 is used to indicate the terminal device not to send overheating assistance information to the access network device, that is, when the access network device configures that the terminal device does not send overheating assistance information, the terminal device does not perform step 302.

303: The access network device sends configuration information used to lower an air interface configuration to the terminal device.

For example, after the access network device receives the overheating assistance information sent by the terminal device, the access network device may determine whether to lower the air interface configuration to alleviate the overheating problem of the terminal device. Optionally, the decision is implemented by a network side. When the access network device determines to lower the air interface configuration, the access network device may send, to the terminal device based on the received overheating assistance information, the configuration information used to lower the air interface configuration, that is, the access network device reconfigures low-capability air interface configuration information for the terminal device.

After the terminal device performs communication by using a lowered air interface configuration, power consumption of the terminal device is reduced, and a temperature of the terminal device is also reduced, so as to alleviate the overheating problem of the terminal device.

In a scenario in which the terminal device simultaneously performs dual-connectivity communication with two access network devices, for example, in the scenario in FIG. 1 or FIG. 2, an air interface configuration on the MN side and an air interface configuration on the SN side are independent of each other. In other words, the terminal device may separately perform air interface transmission with the MN based on the air interface configuration on the MN side and perform air interface transmission with the SN based on the air interface configuration on the SN side. When an overheating problem of the terminal device occurs because the terminal device performs air interface transmission with the MN based on the air interface configuration on the MN side, the overheating problem of the terminal device may be alleviated by lowering the air interface configuration on the MN side of the terminal device. When an overheating problem of the terminal device occurs because the terminal device performs air interface transmission with the SN based on the air interface configuration on the SN side, the overheating problem of the terminal device may be alleviated by lowering the air interface configuration on the SN side of the terminal device.

With reference to FIG. 4, the following describes a method for lowering a capability or a configuration of a terminal device in a DC scenario. The method in FIG. 4 is used to resolve an overheating problem of the terminal device caused when the terminal device performs air interface transmission with an SN based on an air interface configuration on the SN side.

For example, in the EN-DC scenario, an MN is an E-UTRA base station and is responsible for configuring an E-UTRA-side air interface configuration, and the SN is an NR base station and is responsible for configuring an NR-side air interface configuration. Because the NR side may support a larger bandwidth and a higher MIMO layer, an overheating problem is more likely to occur when the terminal device performs air interface transmission with the NR side (that is, the SN).

Refer to FIG. 4. The method includes steps 401 to 403.

401: The MN sends, to the terminal device, overheating configuration information related to the SN.

The overheating configuration information related to the SN is used to indicate whether the terminal device sends overheating assistance information to an access network device, or is used to indicate whether the terminal device is allowed to report, to the SN, overheating assistance information related to the SN, or is used to configure that the terminal device reports, to the access network device, overheating assistance information related to the SN when detecting that overheating occurs in the terminal device. When overheating occurs on the terminal device because the terminal device performs air interface transmission with the SN based on the air interface configuration on the SN side, the terminal device sends, to the SN, overheating assistance information related to the SN, and the overheating assistance information related to the SN is used by the SN to determine configuration information used to lower the air interface configuration on the SN side.

In this embodiment, because a protocol specifies that control plane signaling is controlled by the MN, the MN has a main decision-making right. Therefore, the MN determines and delivers, to the terminal device, the overheating configuration information related to the SN. For example, the MN may use an RRC connection reconfiguration message of the MN to carry the overheating configuration information related to the SN. However, this is not limited in this embodiment of this application.

402: The terminal device sends, to the SN, overheating assistance information related to the SN.

For example, when the overheating configuration information related to the SN in step 401 is used to indicate the terminal device to send, to the SN, overheating assistance information related to the SN, that is, when the MN configures that the terminal device sends overheating assistance information related to the SN, the terminal device may send overheating assistance information to the SN when an overheating problem occurs on the terminal device, and the overheating assistance information is used by the SN to resolve the overheating problem of the terminal device caused when the terminal device performs air interface transmission with the SN.

403: The SN sends air interface configuration information to the terminal device, where the air interface configuration information is used to lower an air interface configuration between the SN and the terminal device.

For example, after the SN receives the overheating assistance information related to the SN sent by the terminal device, the SN may determine whether to lower the air interface configuration to alleviate the overheating problem of the terminal device. When the SN determines to lower the air interface configuration, the SN may send the air interface configuration information to the terminal device based on the received overheating assistance information related to the SN. In other words, the SN reconfigures low-capability SN air interface configuration information for the terminal device.

After the terminal device communicates with the SN by using a lowered SN air interface configuration, power consumption of the terminal device is reduced, and a temperature of the terminal device is also reduced, to alleviate the overheating problem of the terminal device.

In some embodiments, when the SN does not want to lower the air interface configuration, the SN may ignore the overheating assistance information related to the SN.

It should be noted that, in this embodiment of this application, message transmission between the terminal device and the SN may be relayed by the MN, that is, the MN forwards a message between the terminal device and the SN.

In the method shown in FIG. 4, the overheating assistance information related to the SN is used by the SN to lower the SN air interface configuration. Therefore, whether the terminal device is allowed to report overheating assistance information related to the SN should be determined by the SN, or should be determined based on a requirement of the SN. In a case in which whether the terminal device is allowed to report the overheating assistance information related to the SN is determined by the MN independently without considering the requirement of the SN, if the SN does not want to receive overheating assistance information related to the SN at all, or the SN does not want to lower the SN air interface-related configuration, reporting of the overheating assistance information related to the SN by the terminal device is in vain, air interface resources of the MN and resources of a link between the MN and the SN are wasted, and signaling overheads are increased.

In view of this, an embodiment of this application provides a communication method, to avoid the foregoing problem by negotiating, by an MN and an SN, configuration of overheating assistance information related to the SN.

The following describes in detail a communication method and a communications apparatus provided in this application with reference to the accompanying drawings.

The technical solutions of this application may be applied to a wireless communications system, and communications apparatuses in the wireless communications system may have a wireless communication connection relationship. One of the communications apparatuses may be, for example, a first access device (for example, a master node MN) or a chip configured in a first access device (for example, a master node MN), another one of the communications apparatuses may be, for example, a second access device (for example, a secondary node SN) or a chip configured in a second access device (for example, a secondary node SN), and another one of the communications apparatus may be, for example, a terminal device or a chip configured in a terminal device. This is not limited in embodiments of this application.

It should be further understood that, in the following embodiments, "obtained in advance" may include being indicated by a network device by using signaling or being predefined, for example, being defined in a protocol. "Predefined" may be implemented by pre-storing corresponding code or a corresponding table in a device (for example, including a terminal device and a network device), or in another manner that may be used to indicate related information. A specific implementation is not limited in this application.

It should further be understood that "being stored" in embodiments of this application may refer to "being stored in one or more memories". The one or more memories may be separately disposed, or may be integrated into an encoder, a translator, a processor, or a communications apparatus. Alternatively, some of the one or more memories may be separately disposed, and some of the one or more memories are integrated into the translator, the processor, or the communications apparatus. A type of the memory may be any form of storage medium. This is not limited in this application.

It should further be understood that, the "protocol" in embodiments of this application may be a standard protocol in the communication field, for example, may include an LTE protocol, an NR protocol, and a related protocol applied to a future communications system. This is not limited in this application.

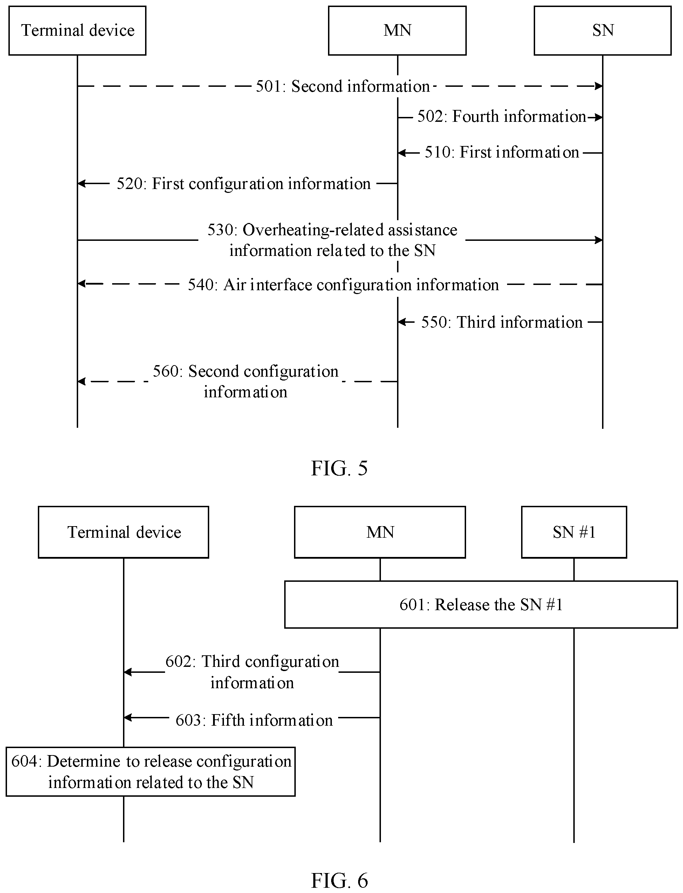

With reference to FIG. 5 to FIG. 9, an example in which a first access device is a master node MN and a second access device is a secondary node SN is used for description below. For an implementation method of a chip in the master node MN and a chip in the secondary node SN, refer to specific descriptions of the master node MN and the secondary node SN. Details are not described again.

FIG. 5 is a schematic flowchart of a communication method from the perspective of device interaction. As shown in FIG. 5, in the method shown in FIG. 5, steps 501, 502, and steps 540, 550 and 560 are optional steps.

510: The SN sends first information to the MN. The first information is used to indicate (or request) that a terminal device is allowed to report overheating assistance information related to the SN, or it may be understood that the first information is used to indicate (or request) a terminal device to report overheating assistance information related to the SN, or it may be understood that the first information is used to indicate (or request) that a terminal device can report overheating assistance information related to the SN when detecting that overheating occurs in the terminal device. Correspondingly, the MN receives the first information.

In step 510, the SN indicates to the MN that the SN expects to obtain overheating configuration information related to the SN. In other words, if the SN allows the terminal device to report overheating assistance information related to the SN, the SN may request the MN to configure that the terminal device is allowed to report overheating assistance information related to the SN.

For example, when the SN has a function of alleviating an overheating problem of the terminal device by lowering an air interface configuration of the terminal device, the SN may allow the terminal device to report overheating assistance information related to the SN. When the SN allows the terminal device to report overheating assistance information related to the SN, the SN may determine and send the first information to the MN, that is, indicate to configure the terminal device to be able to report overheating assistance information related to the SN when detecting that overheating occurs in the terminal device. On the contrary, when the SN does not have a function of alleviating an overheating problem of the terminal device by lowering an air interface configuration of the terminal device, or when the SN has the function of alleviating an overheating problem of the terminal device by lowering an air interface configuration of the terminal device but does not enable the function, the SN may not allow the terminal device to report overheating assistance information related to the SN, that is, indicate to not configure the terminal device to be able to report overheating assistance information related to the SN when detecting that overheating occurs in the terminal device.

It should be noted that, because of high power consumption in the terminal device, a temperature in the terminal device (for example, a CPU) is increased. When the temperature of the terminal device is increased to a specific threshold, it may be considered that an overheating problem occurs on the terminal device. For example, the terminal device may obtain the threshold in advance. In a specific example, the threshold may be set to 40 degrees, 38 degrees, 42 degrees, or the like. This is not limited in this embodiment of this application.

For example, in step 510, the SN may first determine the first information, and then send the first information to the MN

In an implementation, the first information may further include time of a prohibit timer corresponding to overheating assistance information related to the SN, that is, a value of the prohibit timer. The prohibit timer is started after the terminal device reports overheating assistance information related to the SN, and during running of the prohibit timer, the terminal device is prohibited from sending overheating assistance information related to the SN. In other words, the prohibit timer is used to control a frequency at which the terminal device reports overheating assistance information.

For example, after the terminal device reports overheating assistance information once, the terminal device starts the prohibit timer. During running of the prohibit timer, the terminal device is prohibited from sending overheating assistance information, that is, the terminal device cannot send overheating assistance information again during running of the prohibit timer, and can send overheating assistance information again only after the prohibit timer expires. Optionally, the MN may synchronously start the prohibit timer. During running of the prohibit timer, if the MN receives overheating assistance information sent by the terminal device, the MN may ignore the overheating assistance information.

As an example, the value of the prohibit timer may be set with reference to an existing protocol. For example, a value of the overheating prohibit timer specified in the existing protocol may be {s0, s0dot5, s1, s2, s5, s10, s20, s30, s60, s90, s120, s300, s600, spare3, spare2, spare1}, where s indicates that the unit is second.

It should be noted that the "reporting" herein may mean sending by the terminal device to the SN. For example, message transmission between the terminal device and the SN may be relayed by the MN, that is, the MN forwards a message between the terminal device and the SN. Optionally, the "reporting" herein may mean sending by the terminal device to the MN

In some optional embodiments, the first information may further include duration, used to indicate that after the terminal device is configured to be allowed to report overheating assistance information related to the SN, the terminal device can report overheating assistance information related to the SN within the duration and does not report overheating assistance information related to the SN when the duration expires.

In some optional embodiments, step 510 may occur in a process of adding an SN (that is, a process in which the MN adds another base station as an SN of the MN to form a dual-connectivity network architecture).

In an implementation, for example, in the process of adding an SN or before step 510, the method may further include step 501, that is, the SN may further receive second information. The second information is used to indicate that the terminal device has a capability of supporting reporting of overheating assistance information related to the SN. After receiving the second information, the SN may determine the first information based on the second information. That is, the SN determines to generate the first information based on a fact that the terminal device has a capability of supporting reporting of overheating assistance information related to the SN.

For example, the terminal device may send, to the MN, capability information indicating that the terminal device supports sending of overheating assistance information related to the SN. In a possible implementation, after obtaining a message including the capability information, the MN directly forwards the message to the SN (that is, the MN does not check content in the message). In another possible implementation, after obtaining a message including the capability information, the MN extracts a part of information related to the capability information, reassembles the part of information related to the capability information into a new message, and sends the new message to the SN.

In some optional embodiments, when the terminal device does not send the second information, it may be considered that the terminal device does not have the capability of supporting reporting of overheating assistance information related to the SN. In other words, when the SN does not receive the second information, the SN may consider that the terminal device does not have the capability of reporting the overheating assistance information related to the SN.

For example, when the second information is set to a first value (for example, setup), it indicates that the terminal device has the capability of supporting reporting of overheating assistance information related to the SN; or when the first information is set to a second value (for example, release), it indicates that the terminal device does not have the capability of supporting reporting of overheating assistance information related to the SN.

In some embodiments, when the terminal device has the capability of supporting reporting of overheating assistance information related to the SN, the SN may determine that the terminal device is allowed to report the overheating assistance information related to the SN, that is, determine and send the first information.

In some other embodiments, when the terminal device does not have the capability of supporting reporting of overheating assistance information related to the SN, or when the terminal device has the capability of supporting reporting of overheating assistance information related to the SN but the SN does not want to lower an air interface configuration, the SN may determine that the terminal device is not allowed to report the overheating assistance information related to the SN.

In an implementation, for example, in the process of adding an SN or before step 510, the method may further include step 502, that is, the MN may further send fourth information to the SN. The fourth information is used to indicate that the terminal device is currently allowed to report, to the SN, overheating assistance information related to the SN. After receiving the fourth information, the SN may determine to generate the first information based on the fourth information or based on the fourth information and other information (for example, the second information).

When the SN determines that the terminal device is not allowed to report overheating assistance information related to the SN, the SN may send one piece of information different from the first information to the MN, or not send the first information, to indicate (or request) the MN to configure that the terminal device is not allowed to report overheating assistance information related to the SN. Correspondingly, when the MN receives the information different from the first information, or does not receive the first information, the MN may determine that the SN does not allow the terminal device to report overheating assistance information related to the SN. This is not limited in this embodiment of this application. For example, the SN may indicate, in the following three manners, whether the terminal device is allowed to report overheating assistance information related to the SN.

In a first implementation, whether the terminal device is allowed to report overheating assistance information related to the SN may be indicated based on whether the first information exists. For example, if the first information exists, that is, the SN sends the first information to the MN, it indicates that the terminal device is allowed to report overheating assistance information related to the SN. If the first information does not exist, that is, the SN does not send the first information to the MN, it indicates that the terminal device is not allowed to report the overheating-related assistance information related to the SN.

In a second implementation, whether the terminal device is allowed to report overheating assistance information related to the SN may be determined based on a value of the first information. For example, when the first information is set to a first value (for example, setup), it indicates that the terminal device is allowed to report overheating assistance information related to the SN; or when the first information is set to a second value (for example, release), it indicates that the terminal device is not allowed to report overheating assistance information related to the SN.

In a third implementation, two types of information (for example, the first information and third information) may be further used to indicate whether the terminal device is allowed to report overheating assistance information related to the SN. For example, the first information may be set to a first value (for example, setup), to indicate that the terminal device is allowed to report overheating assistance information related to the SN, and the third information may be set to a second value (for example, release), to indicate that the terminal device is not allowed to report the overheating-related assistance information related to the SN.

520: The MN sends first configuration information to the terminal device.

The first configuration information is used to indicate the terminal device to report overheating assistance information related to the SN, or it may be understood that the first configuration information is used to indicate that the terminal device is allowed to report overheating assistance information related to the SN, or it may be understood that the first configuration information is used to configure the terminal device to be able to report overheating assistance information related to the SN when detecting that overheating occurs in the terminal device. The overheating assistance information related to the SN is overheating assistance information sent by the terminal device to the SN when an overheating problem occurs on the terminal device because the terminal device performs air interface transmission with the SN based on an air interface configuration on the SN side. The overheating assistance information related to the SN is used by the SN to determine configuration information used to lower the air interface configuration on the SN side.

It should be noted that, in this embodiment of this application, when the first configuration information is used to indicate whether the terminal device is allowed to report overheating assistance information related to the SN, the configuration information may be referred to as overheating configuration information related to the SN. For example, the MN may indicate, in the following three manners, whether the terminal device is allowed to report overheating assistance information related to the SN.

In a first implementation, whether the terminal device is allowed to report overheating assistance information related to the SN may be indicated based on whether the overheating configuration information related to the SN (for example, the first configuration information) exists. For example, if the first configuration information exists, that is, the MN sends the first configuration information to the terminal device, it indicates that the terminal device is allowed to report the overheating-related assistance information to the SN. If the first configuration information does not exist, that is, the MN does not send the first configuration information to the terminal device, it indicates that the terminal device is not allowed to report the overheating-related assistance information to the SN.

In a second implementation, whether the terminal device is allowed to report overheating assistance information related to the SN may be indicated based on a value of the first configuration information. For example, when the first configuration information is set to a first value (for example, setup), it indicates that the terminal device is allowed to report overheating assistance information related to the SN; or when the first configuration information is set to a second value (for example, release), it indicates that the terminal device is not allowed to report overheating assistance information related to the SN.

In a third implementation, two types of overheating configuration information related to the SN may be used to indicate whether the terminal device is allowed to report overheating assistance information related to the SN. The two types of overheating configuration information related to the SN are, for example, the first configuration information and second configuration information. The second configuration information is used to indicate that the terminal device is not allowed to report the overheating-related assistance information to the SN. For example, the first configuration information may be set to a first value (for example, setup), to indicate that the terminal device is allowed to report the overheating-related assistance information, and the second configuration information may be set to a second value (for example, release), to indicate that the terminal device is not allowed to report the overheating-related assistance information.

In a possible implementation, after receiving the first information, the MN may use the first configuration information to carry the first information and forward the first information to the terminal device. In this case, the MN may not check content in the first information.

In another possible implementation, after receiving the first information, the MN generates the first configuration information based on the first information, and sends the first configuration information to the terminal device. This is not limited in this embodiment of this application. For example, when the first information is used to indicate that the terminal device is allowed to report overheating assistance information related to the SN, the MN may send the first configuration information to the terminal device. For another example, when the MN does not receive the first information, the MN considers by default that the SN does not allow the terminal device to report overheating assistance information related to the SN, and the MN may not send the first configuration information to the terminal device.

Optionally, the first configuration information may further include time of a prohibit timer corresponding to overheating assistance information related to the SN. Specifically, for the prohibit timer, refer to the foregoing description. For brevity, details are not described herein again.

In some optional embodiments, when the first information and the first configuration information each include time of a prohibit timer of overheating assistance information related to the SN, the time that is of the prohibit timer and that is in the first configuration information is determined based on the time that is of the prohibit timer and that is in the first information.

In some optional embodiments, when the first information does not include time of a prohibit timer corresponding to overheating assistance information related to the SN, the MN may independently determine time that is of a prohibit timer and that is in the configuration information. For example, in this case, the time of the prohibit timer may be selected by the MN from possible time that is of the prohibit timer and that is specified in a protocol.

For example, the MN may use a radio resource control (radio resource control, RRC) connection reconfiguration message of the MN to carry the first configuration information. However, this is not limited in this embodiment of this application.

It should be noted that a difference between step 520 and step 401 in FIG. 4 lies in that, in step 520, the MN sends the first configuration information to the terminal device based on the first information received in step 510. In other words, in step 520, whether the terminal device sends overheating assistance information related to the SN is determined by the SN, or is determined based on considering a requirement of the SN. However, in step 401, whether the terminal device reports overheating assistance information related to the SN is determined by the MN

530: The terminal device sends, to the SN, overheating assistance information related to the SN.

For example, when the first configuration information in step 520 is used to indicate the terminal device to report, to the SN, overheating assistance information related to the SN, the terminal device may send the overheating assistance information to the SN when an overheating problem occurs on the terminal device, and the overheating assistance information is used by the SN to resolve the overheating problem of the terminal device caused when the terminal device performs air interface transmission with the SN. For example, the overheating assistance information may be carried in an assistance information message.

Specifically, the terminal device may send, to the MN, the overheating assistance information related to the SN, and the MN forwards, to the SN, the overheating assistance information related to the SN. In this process, in an implementation, the MN may not modify the overheating assistance information related to the SN, or even may not perceive the assistance information. In another implementation, the MN may obtain the overheating-related assistance information related to the SN, reassemble a new message including the overheating-related assistance information related to the SN, and send the new message to the SN. In an implementation, the terminal device may alternatively directly send, to the SN, the overheating assistance information related to the SN without forwarding by the MN

In an example, the overheating assistance information related to the SN includes at least one of a maximum quantity of uplink carriers, a maximum quantity of uplink cells, a maximum quantity of downlink carriers, a maximum quantity of downlink cells, a maximum uplink aggregated bandwidth in a first frequency band, a maximum downlink aggregated bandwidth in the first frequency band, a maximum quantity of uplink MIMO layers of a serving cell on the first frequency band, a maximum quantity of downlink MIMO layers of a serving cell on the first frequency band that are of the terminal device under the SN, and a terminal device type. The quantity of carriers includes a quantity of primary SCG carriers and/or a quantity of secondary carriers, the quantity of cells includes a quantity of primary SCG cells and/or a quantity of secondary cells, and the first frequency band includes a low-frequency FR1 frequency band and/or a high-frequency FR2 frequency band.

In some optional embodiments, there is a correspondence between the terminal device type (UE category) and the maximum quantity of downlink MIMO layers, and the correspondence may be predefined in a protocol. For example, a UE category 1 corresponds to that the maximum quantity of downlink MIMO layers is 1, a UE category 2 corresponds to that the maximum quantity of downlink MIMO layers is 2, and a UE category 5 corresponds to that the maximum quantity of downlink MIMO layers is 4.

It should be noted that, after step 530, if the overheating prohibit timer is still in a running state, the terminal device does not perform step 530 again. However, after step 530, if the overheating prohibit timer is not in the running state, once the overheating problem occurs again on the terminal device, the terminal device performs step 530.

540: The SN sends air interface configuration information to the terminal device, where the air interface configuration information is used to indicate an air interface configuration between the SN and the terminal device, for example, configuration information in an RRC connection reconfiguration message. In a possible implementation, the air interface configuration information may be used to lower an SN air interface configuration between the SN and the terminal device.

Exemplarily, the air interface configuration information includes at least one of a quantity of uplink carriers, a quantity of uplink cells, a quantity of downlink carriers, a quantity of downlink cells, a carrier bandwidth of a carrier or a cell, a bandwidth part BWP of a carrier or a cell, a quantity of uplink MIMO layers of a carrier or a cell or a BWP, and a quantity of downlink MIMO layers of a carrier or a cell or a BWP. The quantity of carriers includes a quantity of primary SCG carriers and/or a quantity of secondary carriers, the quantity of cells includes a quantity of primary SCG cells and/or a quantity of secondary cells, and the first frequency band includes a low-frequency FR1 frequency band and/or a high-frequency FR2 frequency band.

For example, after the SN receives the overheating assistance information related to the SN reported by the terminal device, the SN may determine whether to lower the air interface configuration to alleviate the overheating problem of the terminal device. Optionally, the decision is implemented by the SN side. For example, when the SN considers that current signaling overheads are large, and the SN does not want to further increase the signaling overheads due to sending the air interface configuration information, or the SN does not want to change currently allocated resources, the SN may determine not to lower the air interface configuration. For another example, when the SN considers that current signaling overheads are not large, or the SN currently does not have allocated resources, the SN may determine to lower the air interface configuration to alleviate the overheating problem of the terminal device.

When the SN determines to lower the air interface configuration, the SN may send the air interface configuration information used to lower the air interface configuration to the terminal device based on the received overheating assistance information related to the SN. In other words, the SN reconfigures low-capability SN air interface configuration information for the terminal device.

For example, when the overheating assistance information includes the terminal device type or the quantity of MIMO layers, the SN may reconfigure an appropriate quantity of MIMO layers for the terminal device based on the terminal device type or the quantity of MIMO layers that is reported by the terminal device, to lower an air interface configuration of the terminal device. For example, when the terminal device type reported by the terminal device is a UE category 5 or the maximum quantity of downlink MIMO layers reported by the terminal device is 4, and the terminal device supports a UE category 2 or supports a maximum quantity of downlink MIMO layers to be 2, the SN reconfigures a terminal device type of the terminal device to the UE category 2 or a maximum quantity of downlink MIMO layers to 2.

After the terminal device communicates with the SN by using a lowered SN air interface configuration, power consumption of the terminal device is reduced, and a temperature of the terminal device is also reduced, to alleviate the overheating problem of the terminal device. It should be noted that, in this embodiment of this application, message transmission between the terminal device and the SN may be relayed by the MN, that is, the MN forwards a message between the terminal device and the SN. Certainly, the air interface configuration information may alternatively be directly sent by the SN to the terminal device without being forwarded by the MN. This is not limited in this embodiment of this application.

Therefore, in this embodiment of this application, the SN sends, to the MN, the first information used to indicate that the terminal device is allowed to report overheating assistance information related to the SN, so that the MN can configure, based on the first information, the terminal device to be able to report, to the SN, overheating assistance information related to the SN. In this way, that the terminal device is allowed to report overheating assistance information related to the SN is determined by the SN or is determined based on the requirement of the SN. This further helps reduce or prevent the terminal device from reporting overheating assistance information related to the SN in vain, helps save air interface resources of the MN and resources of a link between the MN and the SN, and reduces signaling overheads.

550: The SN sends third information to the MN, where the third information is used to indicate that the terminal device is not allowed to send overheating assistance information related to the SN.

In other words, in addition to having a requirement of requesting to configure that the terminal device is allowed to report overheating assistance information related to the SN (for example, requesting the MN to configure that the terminal device is allowed to report the assistance information in step 510), the SN may further configure that the terminal device is not allowed to report overheating assistance information related to the SN, for example, request the MN to configure that the terminal device is not allowed to report overheating assistance information related to the SN. In this case, the SN may perform step 550.

In a possible case, after the SN requests to configure that the terminal device is allowed to report overheating assistance information related to the SN, the SN may request the MN to release the overheating configuration information related to the SN (for example, the first configuration information). For example, in this embodiment of this application, when step 550 is performed after step 510, the third information may be used to indicate the MN to release the first configuration information in step 520.

In another possible case, step 550 may alternatively be performed in an initial phase, for example, in a process of adding an SN, in which the SN indicates, to the MN, that the terminal device is not allowed to report overheating assistance information related to the SN. That is, before step 550 is performed, step 510 and step 520 are not performed.

560: The MN sends second configuration information to the terminal device.

The second configuration information is used to indicate that the terminal device is not allowed to report, to the SN, overheating assistance information related to the SN.

In a possible implementation, after receiving the third information, the MN may use the second configuration information to carry the third information and forward the third information to the terminal device. In this case, the MN may not check content in the third information. In another possible implementation, after receiving the third information, the MN regenerates second configuration information based on the third information, and sends the second configuration information to the terminal device. This is not limited in this embodiment of this application.

In a possible case, when step 560 is performed after step 520, the second configuration information is used to release the first configuration information.

In another possible case, when step 510 and step 520 are not performed before step 560, the second configuration information is used to indicate that the terminal device is not allowed to report, to the SN, overheating assistance information related to the SN.

For example, the MN may use an RRC connection reconfiguration message of the MN to carry the second configuration information. However, this is not limited in this embodiment of this application.

After step 560, the terminal device does not report overheating assistance information related to the SN.

In some optional embodiments, after step 560, step 510 and step 520 may be performed. To be specific, the SN indicates the MN to reconfigure that the terminal device is allowed to report overheating assistance information related to the SN. This is not limited in this embodiment of this application.

Therefore, in this embodiment of this application, when the SN does not allow the terminal device to report overheating assistance information related to the SN, or when the SN no longer wants the terminal device to send overheating assistance information related to the SN, the SN may send, to the MN, the third information used to indicate that the terminal device is not allowed to send overheating assistance information related to the SN, so that the MN can configure, based on the third information, that the terminal device does not report, to the SN, overheating assistance information related to the SN. In this way, that the terminal device is not allowed to report overheating assistance information related to the SN is determined by the SN or is determined based on the requirement of the SN. This further helps reduce or prevent the terminal device from reporting overheating assistance information related to the SN in vain, helps save air interface resources of the MN and resources of a link between the MN and the SN, and reduces signaling overheads.

In some optional embodiments, in a process of releasing the SN (that is, a scenario in which the MN releases the SN, a dual-connectivity network architecture is changed, and the terminal device is connected to only one access network device, for example, a network architecture in which the terminal device is connected to only an LTE access network device or a network architecture in which the terminal device is connected to only an NR access network device), there is also a problem that how the terminal device processes configured overheating configuration information related to the SN (for example, the first configuration information). With reference to FIG. 6 to FIG. 8, the following describes a method for processing the first configuration information by the terminal device in the process of releasing the SN.

FIG. 6 is a schematic flowchart of a communication method from the perspective of device interaction. In the method shown in FIG. 6, in a process of releasing an SN #1, an MN may explicitly indicate a terminal device to release first configuration information. As shown in FIG. 6, the method includes step 601 to step 604.

601: The MN determines to release the SN #1.

In step 601, SN #1 is an example of an SN. For example, SN #1 may be the SN in FIG. 5. However, this is not limited in this embodiment of this application.

It should be noted that in this embodiment of this application, an example in which the SN #1 is released in a dual-connectivity scenario is used for description. However, this embodiment of this application is not limited thereto. For example, in a multi-connectivity scenario, the MN may further release another SN. For a manner of processing overheating configuration information related to the SN of the another SN by the terminal device after the MN releases the another SN, refer to a manner of processing overheating configuration information related to the SN of the SN #1. Details are not described in this embodiment of this application. In addition, unless otherwise specified, in the following steps 602 to 604, an SN is the SN #1.

602: The MN sends third configuration information to the terminal device, where the third configuration information is used to indicate that the MN releases the SN, and the SN may be the SN #1. When the terminal device receives the third configuration information, the terminal device may determine, based on the third configuration information, to release configuration information related to the SN that is configured by the SN for the terminal device. For example, the configuration information related to the SN that is configured by the SN for the terminal device may include at least one of an SCG configuration, measurement information configured by the SN, power configuration information, and the like.

It should be noted that when receiving the third configuration information, the terminal device does not release configuration information related to the SN that is configured by the MN for the terminal device. The configuration information related to the SN that is configured by the MN for the terminal device may include overheating configuration information related to the SN that is sent by the terminal device to the MN in this embodiment of this application.

Optionally, the third configuration information may be carried by using an RRC connection reconfiguration message. However, this is not limited in this embodiment of this application.

603: The MN sends fifth information to the terminal device, where the fifth information is used to indicate the terminal device to release the first configuration information. For example, when the MN releases the SN, the MN sends the fifth information to the terminal device, that is, the fifth information is used to indicate the terminal device to release the first configuration information when the MN releases the SN. In other words, when the MN releases the SN, the MN may indicate the terminal device to release the first configuration information, that is, the terminal device is not allowed to report overheating assistance information related to the SN. Herein, the MN explicitly indicates, by using the fifth information, the terminal device to release the first configuration information.

In a possible implementation, the fifth information may be the foregoing second configuration information. In other words, when the MN releases the SN, the MN sends the second configuration information to the terminal device, to release the first configuration information. In other words, it is specified that the MN needs to send the second configuration information when releasing the SN. However, this is not limited in this embodiment of this application.

Specifically, for the first configuration information and the second configuration information, refer to the foregoing descriptions. For brevity, details are not described herein again.

Optionally, the fifth information may be carried by using an RRC connection reconfiguration message. However, this is not limited in this embodiment of this application.

It should be noted that there is no sequence limit on step 602 and step 603 in this embodiment of this application. For example, step 603 may be performed before step 602; or step 603 may be performed after step 602; or step 602 and step 603 may be simultaneously performed. When step 602 and step 603 are simultaneously performed, in a possible implementation, the fifth information and the third configuration information may be carried in a same message. However, this is not limited in this embodiment of this application.

604: The terminal device releases the first configuration information.

In this embodiment of this application, when the terminal device receives the fifth information sent by the MN, the terminal device may determine to release the first configuration information based on the fifth information, that is, determine to release the overheating configuration information related to the SN.

Because the SN is released (that is, the terminal device is disconnected from the SN), a corresponding configuration related to the SN should be released. This helps save storage space.

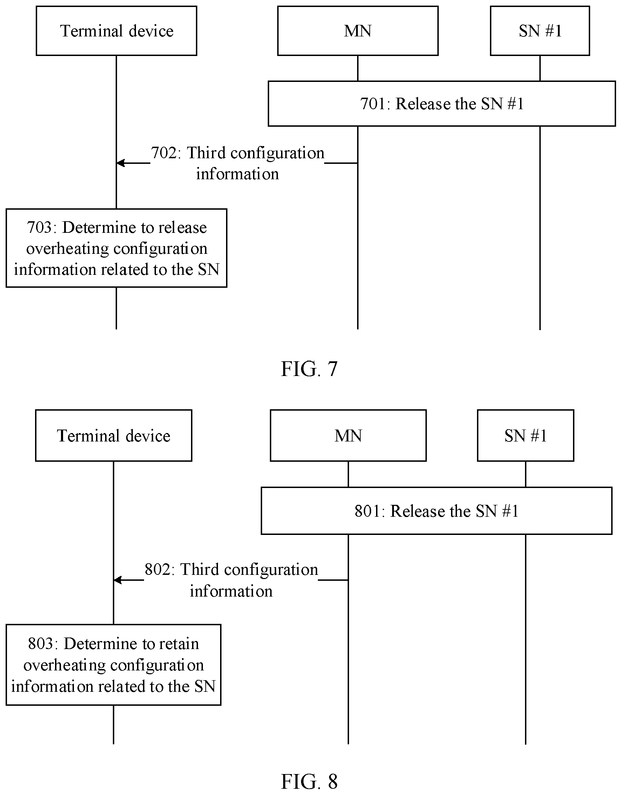

FIG. 7 is a schematic flowchart of a communication method from the perspective of device interaction. In the method shown in FIG. 7, in a process of releasing an SN #1, an MN does not indicate a terminal device to release first configuration information or not to release first configuration information, but the terminal device independently determines to release overheating assistance information related to the SN. As shown in FIG. 7, the method includes step 701 to step 703.

701: The MN determines to release the SN #1.

In this embodiment of this application, unless otherwise specified, in the following steps 702 and 703, an SN is the SN #1.

702: The MN sends third configuration information to the terminal device, where the third configuration information is used to indicate that the MN releases the SN.

Specifically, for step 701 and step 702, refer to descriptions of step 601 and step 602 in FIG. 6. For brevity, details are not described herein again.

703: The terminal device determines to release the first configuration information, that is, determines to release overheating configuration information related to the SN. In other words, after the terminal device receives the third configuration information from the MN (which may also be described as that the terminal device determines that the MN releases the SN #1), the terminal device releases the first configuration information.

For example, when determining that the MN releases the SN (for example, the terminal device receives the third configuration information), the terminal device may independently determine to release the first configuration information, that is, the terminal device is not allowed to report overheating assistance information related to the SN. For example, it may be specified in a protocol that when the MN releases the SN (for example, the terminal device receives the third configuration information), the terminal device releases the first configuration information, that is, the terminal device is not allowed to report overheating assistance information related to the SN. This is not limited in this embodiment of this application. In other words, when detecting an instruction for releasing the SN, the terminal device releases both information configured by the MN for the SN and information configured by the SN for the SN.

Specifically, for the first configuration information, refer to the foregoing description. For brevity, details are not described herein again.

Because the SN is released (that is, the terminal device is disconnected from the SN), a corresponding configuration related to the SN should be released. This helps save storage space.

FIG. 8 is a schematic flowchart of a communication method from the perspective of device interaction. In the method shown in FIG. 8, in a process of releasing an SN #1, an MN does not indicate a terminal device to release first configuration information or not to release first configuration information, but predefines a rule of reserving the first configuration information by the terminal device. As shown in FIG. 8, the method includes step 801 to step 803.

801: The MN determines to release the SN #1.

In this embodiment of this application, unless otherwise specified, in the following steps 802 and 803, an SN is the SN #1.

802: The MN sends third configuration information to the terminal device, where the third configuration information is used to indicate that the MN releases the SN.

Specifically, for step 801 and step 802, refer to descriptions of step 601 and step 602 in FIG. 6. For brevity, details are not described herein again.

803: The terminal device determines to retain the first configuration information. In other words, after the terminal device receives the third configuration information (which may also be described as that the terminal device determines that the MN releases the SN #1), the terminal device retains the first configuration information, and stops reporting overheating assistance information related to the SN.

For example, when determining that the MN releases the SN (for example, the terminal device receives the third configuration information), the terminal device may independently determine to retain the first configuration information, but stop reporting overheating assistance information related to the SN. For example, it is specified in a protocol that when the MN releases the SN (for example, the terminal device receives the third configuration information), the terminal device retains the first configuration information, but stops reporting overheating assistance information related to the SN. This is not limited in this embodiment of this application.

Specifically, for the first configuration information, refer to the foregoing description. For brevity, details are not described herein again.

In this embodiment of this application, after the SN #1 is released, there may be a case in which a requirement of the SN #1 is the same as a requirement of a new SN. In this case, the first configuration information of the original SN #1 can continue to be used in the new SN. The original first configuration information may be directly restored to use, and reconfiguration of first configuration information is not required, so that signaling overheads can be reduced.

Optionally, when determining that the MN adds an SN, for example, after the MN releases an SN and then the MN adds another SN (the SN may be, for example, the SN #1, or another SN), the terminal device may continue to report, to the newly-added SN based on previously-retained first configuration information (that is, the previously-retained first configuration information is restored to use), overheating assistance information related to the SN when the terminal device is overheated. In some possible implementations, when the MN adds another SN, the MN may indicate to the terminal device that the MN adds the SN.

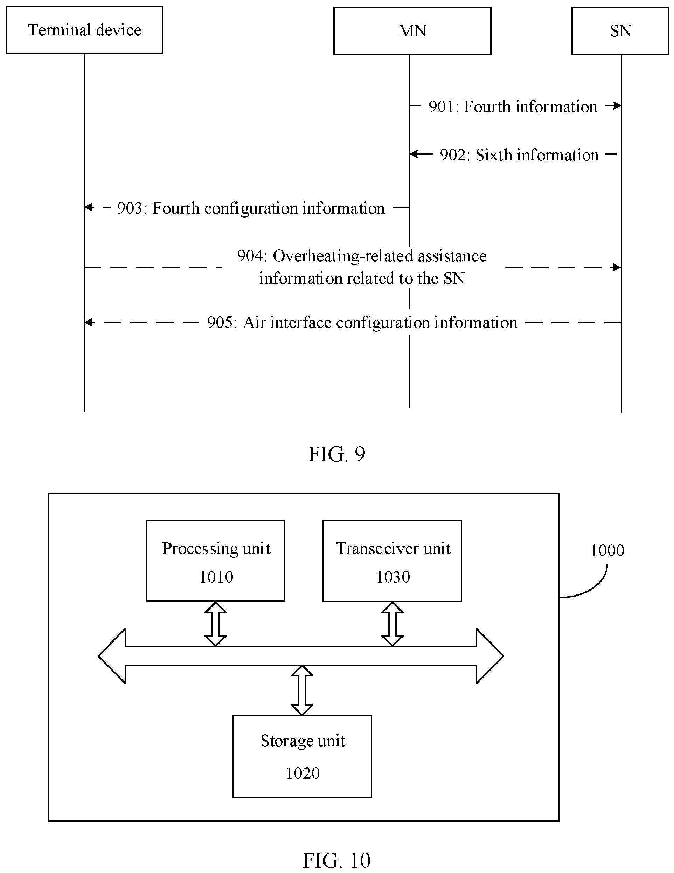

In some optional embodiments of this application, the MN may further negotiate with the SN about whether the terminal device is allowed to report overheating assistance information related to the SN. With reference to FIG. 9, the following describes the negotiation process in detail.

FIG. 9 is a schematic flowchart of a communication method from the perspective of device interaction. In the method shown in FIG. 9, an MN may indicate, to an SN, whether a terminal device is currently allowed to report overheating assistance information related to the SN, and then the SN determines whether the terminal device is allowed to report overheating assistance information related to the SN. As shown in FIG. 9, the method includes step 901 to step 905. Steps 902 to 905 are optional steps.

901: The MN sends fourth information to the SN, where the fourth information is used to indicate whether the terminal device is allowed to report overheating assistance information related to the SN. Correspondingly, the SN receives the fourth information.

In an implementation, when a configuration requirement of the SN is consistent with the fourth information, the SN may not send information to the MN. When a configuration requirement of the SN is inconsistent with the fourth information, the SN may perform step 902.

In an implementation, whether the terminal device is allowed to report overheating assistance information related to the SN may be indicated based on a value of the fourth information. For example, when the fourth information is set to a first value (for example, setup), it indicates that the terminal device is allowed to report overheating assistance information related to the SN; or when the fourth information is set to a second value (for example, release), it indicates that the terminal device is not allowed to report overheating assistance information related to the SN.

For example, step 901 may be performed in a process of adding an SN, or may be performed after an SN is added. This is not limited in this embodiment of this application.

In a possible case, the SN is an SN #2, and the SN #2 is an SN newly added by the MN after the MN releases an SN #1. In addition, after the MN releases the SN #1, the terminal device and the MN further reserve first configuration information. In this case, in a process of adding the SN #2, the MN may send the fourth information to the SN #2, and the fourth information is determined based on whether the SN #1 allows the terminal device to report overheating assistance information related to the SN. In other words, the fourth information can indicate a requirement of the SN #1 for overheating assistance information related to the SN.

Specifically, when the SN #2 and the SN #1 are not a same access network device, a requirement of the SN #2 for overheating assistance information related to the SN may be the same as or different from the requirement of the SN #1 for overheating assistance information related to the SN. In this case, step 901 may be performed, so that the SN #2 learns of the requirement of the SN #1 for overheating assistance information related to the SN.

When the requirement of the SN #2 for overheating assistance information related to the SN is the same as the requirement of the SN #1 for overheating assistance information related to the SN, overheating configuration information related to the SN stored by the terminal device is still applicable. In other words, in this case, the SN #2 is satisfied with the fourth information. In this case, the SN #2 may not send information to the MN

When the requirement of the SN #2 for overheating assistance information related to the SN is different from the requirement of the SN #1 for overheating assistance information related to the SN, overheating configuration information related to the SN stored by the terminal device may no longer be applicable. In other words, in this case, the SN #2 is not satisfied with the fourth information. In this case, step 902 is performed.

Optionally, the fourth information is further used to indicate time of a prohibit timer corresponding to overheating assistance information related to the SN. Specifically, for the prohibit timer, refer to the foregoing description. For brevity, details are not described herein again.

In another implementation, step 902 is performed regardless of whether the configuration requirement of the SN is consistent with the fourth information.

902: The SN sends sixth information to the MN, where the sixth information is used to indicate (or update) the overheating-related configuration information related to the SN.

For example, when the fourth information is used to indicate that the terminal device is allowed to report, to the SN, overheating assistance information related to the SN, the sixth information is used to indicate that the terminal device is not allowed to report overheating assistance information, or indicate the terminal device to release overheating configuration information related to the SN. When the fourth information is used to indicate that the terminal device is not allowed to report overheating assistance information related to the SN, the sixth information is used to indicate that the terminal device is allowed to report overheating assistance information. Alternatively, the fourth information may be the same as the sixth information. This is not limited in this embodiment of this application.

Optionally, when the sixth information is used to indicate that the assistance information is allowed to be sent, or the SN is not satisfied with the time of the prohibit timer indicated by the fourth information, the sixth information may include time of a prohibit timer corresponding to overheating assistance information related to the SN. Specifically, for the prohibit timer, refer to the foregoing description. For brevity, details are not described herein again.

It should be noted that when the SN in FIG. 9 is the same as the SN in FIG. 5, and the fourth information is used to indicate that the terminal device is not allowed to report overheating assistance information related to the SN, the sixth information may be the same as the first information in FIG. 5. In other words, in the method shown in FIG. 5, before step 510, step 901 may be further performed. To be specific, the MN indicates, to the SN, whether the terminal device is allowed to report overheating assistance information related to the SN at a current moment.

903: The MN sends fourth configuration information to the terminal device.

In a possible case, when the sixth information is used to indicate that the terminal device is allowed to report the overheating-related assistance information related to the SN, a function of the fourth configuration information is the same as a function of the first configuration information in FIG. 5. For details, refer to the description of step 520 in FIG. 5. For brevity, the details are not described herein again. In this case, steps 904 and 905 are further included.

In another possible case, when the sixth information is used to indicate that the terminal device is not allowed to report the overheating-related assistance information related to the SN, a function of the fourth configuration information is the same as a function of the second configuration information in FIG. 5. For details, refer to the description of step 560 in FIG. 5. For brevity, the details are not described herein again. In this case, steps 904 and 905 are not performed.

904: The terminal device sends, to the SN, the overheating assistance information related to the SN.

905: The SN sends air interface configuration information to the terminal device.

Specifically, for step 904 and step 905, refer to descriptions of step 530 and step 540 in FIG. 5. For brevity, details are not described herein again.

Therefore, in this embodiment of this application, the MN indicates, to the SN, current overheating configuration information related to the SN, so that the SN can negotiate with the MN to determine whether the terminal device is allowed to report overheating assistance information related to the SN. In this way, whether the terminal device is allowed to report overheating assistance information related to the SN is determined by the SN or is determined based on a requirement of the SN. This further helps reduce or prevent the terminal device from reporting overheating assistance information related to the SN in vain, helps save air interface resources of the MN and resources of a link between the MN and the SN, and reduces signaling overheads.

It may be understood that, in the foregoing embodiments of this application, the method implemented by the master node may alternatively be implemented by a component (for example, a chip or a circuit) that may be used for the master node, and the method implemented by the secondary node may alternatively be implemented by a component (for example, a chip or a circuit) that may be used for the secondary node.

According to the foregoing method, FIG. 10 is a schematic diagram of a wireless communication apparatus 1000 according to an embodiment of this application.

The apparatus 1000 may be a secondary node, or may be a chip or a circuit, for example, a chip or a circuit that may be disposed on the secondary node. The apparatus 1000 may include a processing unit 1010 (an example of a processor) and a transceiver unit 1030.

Optionally, the transceiver unit 1030 may be implemented by using a transceiver, a transceiver-related circuit, or an interface circuit.

Optionally, the apparatus may further include a storage unit 1020. In a possible manner, the storage unit 1020 is configured to store instructions. Optionally, the storage unit may alternatively be configured to store data or information. The storage unit 1020 may be implemented by using a memory.

In a possible design, the processing unit 1010 may be configured to execute the instructions stored in the storage unit 1020, to enable the apparatus 1000 to implement steps performed by the secondary node in the foregoing method.

Further, the processing unit 1010, the storage unit 1020, and the transceiver unit 1030 may communicate with each other through an internal connection path, to transmit a control signal and/or a data signal. For example, the storage unit 1020 is configured to store a computer program, and the processing unit 1010 may be configured to invoke the computer program from the storage unit 1020 and run the computer program, to control the transceiver unit 1030 to receive a signal and/or send a signal, to complete the steps of the secondary node in the foregoing method. The storage unit 1020 may be integrated into the processing unit 1010, or may be disposed separately from the processing unit 1010.

Optionally, if the apparatus 1000 is a communications device, the transceiver unit 1030 may include a receiver and a transmitter. The receiver and the transmitter may be a same physical entity or different physical entities. When the receiver and the transmitter are a same physical entity, the receiver and the transmitter may be collectively referred to as a transceiver.

Optionally, if the apparatus 1000 is the chip or the circuit, the transceiver unit 1030 may include an input interface and an output interface.

In an implementation, it may be considered to implement a function of the transceiver unit 1030 by using a transceiver circuit or a dedicated transceiver chip. It may be considered that the processing unit 1010 may be implemented by using a dedicated processing chip, a processing circuit, a processing unit, or a general-purpose chip.

In another implementation, it may be considered that the communications device (for example, the secondary node) provided in this embodiment of this application may be implemented by using a general-purpose computer. That is, program code for implementing functions of the processing unit 1010 and the transceiver unit 1030 is stored in the storage unit 1020, and a general-purpose processing unit implements the functions of the processing unit 1010 and the transceiver unit 1030 by executing the code in the storage unit 1020.

In an implementation, the processing unit 1010 is configured to determine first information, where the first information is used to indicate that a terminal device is allowed to report overheating assistance information related to the secondary node SN.

The transceiver unit 1030 is configured to send the first information to a master node MN

Optionally, the first information further includes time of a prohibit timer corresponding to overheating assistance information related to the SN.

The prohibit timer is started after the terminal device reports overheating assistance information related to the SN, and during running of the prohibit timer, the terminal device is prohibited from reporting overheating assistance information related to the SN.

Optionally, the transceiver unit 1030 is further configured to receive second information from the MN, where the second information is used to indicate that the terminal device has a capability of supporting reporting of overheating assistance information related to the SN.

Optionally, the transceiver unit 1030 is further configured to: after sending the first information to the MN, send third information to the MN, where the third information is used to indicate that the terminal device is not allowed to report overheating assistance information related to the SN.

Optionally, the transceiver unit 1030 is further configured to receive fourth information from the MN, where the fourth information is used to indicate that the terminal device is allowed to report overheating assistance information related to the SN.

The processing unit 1010 is specifically configured to determine the first information based on the fourth information.

Optionally, the SN is a first SN, and the fourth information is determined based on whether a second SN allows the terminal device to report overheating assistance information related to the SN; and the second SN is an SN that has been released before the MN adds the first SN.

Optionally, the fourth information is further used to indicate time of a prohibit timer corresponding to overheating assistance information related to the SN.

Optionally, the overheating assistance information related to the SN includes at least one of a maximum quantity of uplink carriers, a maximum quantity of uplink cells, a maximum quantity of downlink carriers, a maximum quantity of downlink cells, a maximum uplink aggregated bandwidth in a first frequency band, a maximum downlink aggregated bandwidth in the first frequency band, a maximum quantity of uplink MIMO layers of a serving cell on the first frequency band, and a maximum quantity of downlink MIMO layers of a serving cell on the first frequency band that are of the terminal device under the SN.

The quantity of carriers includes a quantity of primary SCG carriers and/or a quantity of secondary carriers, the quantity of cells includes a quantity of primary SCG cells and/or a quantity of secondary cells, and the first frequency band includes a low-frequency FR1 frequency band and/or a high-frequency FR2 frequency band.

The units in the foregoing embodiment may also be referred to as modules, circuits, or components.

Functions and actions of the modules or units in the apparatus 1000 enumerated above are merely examples for description. When the apparatus 1000 is configured in or is the secondary node, the modules or units in the apparatus 1000 may be configured to perform the actions or processing processes performed by the secondary node in the foregoing method.

For concepts, explanations, detailed description, and other steps of the apparatus 1000 that are related to the technical solutions provided in embodiments of this application, refer to description of the content in the foregoing method or other embodiments. Details are not described herein again.

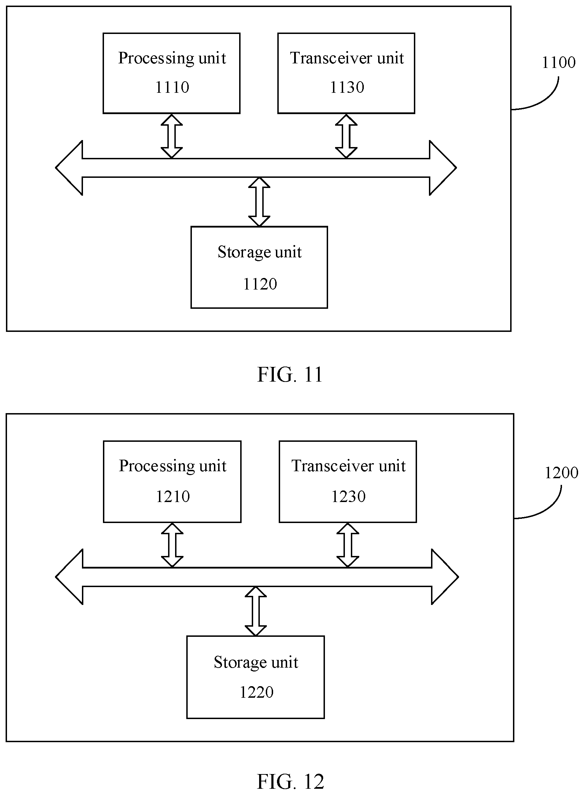

According to the foregoing method, FIG. 11 is a schematic diagram of a wireless communication apparatus 1100 according to an embodiment of this application.

The apparatus 1100 may be a master node, or may be a chip or a circuit, for example, a chip or a circuit that may be disposed on an access device. The apparatus 1100 may include a processing unit 1110 (an example of a processor) and a transceiver unit 1130.

Optionally, the transceiver unit 1030 may be implemented by using a transceiver, a transceiver-related circuit, or an interface circuit.

Optionally, the apparatus may further include a storage unit 1120. In a possible manner, the storage unit 1120 is configured to store instructions. Optionally, the storage unit may alternatively be configured to store data or information. The storage unit 1120 may be implemented by using a memory.

In a possible design, the processing unit 1110 is configured to execute the instructions stored in the storage unit 1120, to enable the apparatus 1100 to implement steps performed by the master node (for example, an MN #1 or an MN #2) in the foregoing method.

Further, the processing unit 1110, the storage unit 1120, and the transceiver unit 1130 may communicate with each other through an internal connection path, to transmit a control signal and/or a data signal. For example, the storage unit 1120 is configured to store a computer program, and the processing unit 1110 may be configured to invoke the computer program from the storage unit 1120 and run the computer program, to control the transceiver unit 1130 to receive a signal and/or send a signal, to complete the steps of the master node device in the foregoing method. The storage unit 1120 may be integrated into the processing unit 1110, or may be disposed separately from the processing unit 1110.

Optionally, if the apparatus 1100 is a communications device (for example, the master node), the transceiver unit 1130 includes a receiver and a transmitter. The receiver and the transmitter may be a same physical entity or different physical entities. When the receiver and the transmitter are a same physical entity, the receiver and the transmitter may be collectively referred to as a transceiver.

Optionally, if the apparatus 1100 is the chip or the circuit, the transceiver unit 1130 includes an input interface and an output interface.

In an implementation, it may be considered to implement a function of the transceiver unit 1130 by using a transceiver circuit or a dedicated transceiver chip. It may be considered that the processing unit 1110 may be implemented by using a dedicated processing chip, a processing circuit, a processing unit, or a general-purpose chip.

In another implementation, it may be considered that the communications device (for example, the master node) provided in this embodiment of this application may be implemented by using a general-purpose computer. That is, program code for implementing functions of the processing unit 1110 and the transceiver unit 1130 is stored in the storage unit 1120, and a general-purpose processing unit implements the functions of the processing unit 1110 and the transceiver unit 1130 by executing the code in the storage unit 1120.

In an implementation, the transceiver unit 1130 is configured to receive first information from a secondary node SN, where the first information is used to indicate that a terminal device is allowed to report overheating assistance information related to the SN.

The transceiver unit 1130 is further configured to send first configuration information to the terminal device based on the first information, where the first configuration information is used to indicate that the terminal device is allowed to report, to the SN, overheating assistance information related to the SN.

Optionally, the first information or the first configuration information further includes time of a prohibit timer corresponding to overheating assistance information related to the SN.

The prohibit timer is started after the terminal device reports overheating assistance information related to the SN, and during running of the prohibit timer, the terminal device is prohibited from reporting overheating assistance information related to the SN.

Optionally, the transceiver unit 1130 is further configured to send second information to the SN, where the second information is used to indicate that the terminal device has a capability of supporting reporting of overheating assistance information related to the SN.

Optionally, the transceiver unit 1130 is further configured to: after receiving the first information from the secondary node SN, receive third information from the SN, where the third information is used to indicate that the terminal device is not allowed to report overheating assistance information related to the SN.

The transceiver unit 1130 is further configured to send second configuration information to the terminal device based on the third information, where the second configuration information is used to indicate that the terminal device is not allowed to report overheating assistance information related to the SN.

Optionally, the transceiver unit 1130 is further configured to send fourth information to the SN, where the fourth information is used to indicate that the terminal device is allowed to report overheating assistance information related to the SN.

Optionally, the SN is a first SN, and the fourth information is determined based on whether a second SN allows the terminal device to report overheating assistance information related to the SN; and the second SN is an SN that has been released before the MN adds the first SN.

Optionally, the fourth information is further used to indicate time of a prohibit timer corresponding to overheating assistance information related to the SN.

Optionally, the transceiver unit 1130 is further configured to send fifth information to the terminal device, where the fifth information is used to indicate the terminal device to release the first configuration information when the MN releases the SN.

Optionally, the overheating assistance information related to the SN includes at least one of a maximum quantity of uplink carriers, a maximum quantity of uplink cells, a maximum quantity of downlink carriers, a maximum quantity of downlink cells, a maximum uplink aggregated bandwidth in a first frequency band, a maximum downlink aggregated bandwidth in the first frequency band, a maximum quantity of uplink MIMO layers of a serving cell on the first frequency band, and a maximum quantity of downlink MIMO layers of a serving cell on the first frequency band that are of the terminal device under the SN.

The quantity of carriers includes a quantity of primary SCG carriers and/or a quantity of secondary carriers, the quantity of cells includes a quantity of primary SCG cells and/or a quantity of secondary cells, and the first frequency band includes a low-frequency FR1 frequency band and/or a high-frequency FR2 frequency band.

Functions and actions of the modules or units in the apparatus 1100 enumerated above are merely examples for description. When the apparatus 1100 is configured in or is the master node, the modules or units in the apparatus 1100 may be configured to perform the actions or processing processes performed by the master node in the foregoing method. Herein, to avoid repetition, detailed descriptions thereof are omitted.

For concepts, explanations, detailed description, and other steps of the apparatus 1100 that are related to the technical solutions provided in embodiments of this application, refer to description of the content in the foregoing method or other embodiments. Details are not described herein again.

According to the foregoing method, FIG. 12 is a schematic diagram of a wireless communication apparatus 1200 according to an embodiment of this application.

The apparatus 1200 may be a terminal device, or may be a chip or a circuit, for example, a chip or a circuit that may be disposed in the terminal device. The apparatus 1200 may include a processing unit 1210 (an example of a processor) and a transceiver unit 1230.

Optionally, the transceiver unit 1030 may be implemented by using a transceiver, a transceiver-related circuit, or an interface circuit.

Optionally, the apparatus may further include a storage unit 1220. In a possible manner, the storage unit 1220 is configured to store instructions. Optionally, the storage unit may alternatively be configured to store data or information. The storage unit 1220 may be implemented by using a memory.

In a possible design, the processing unit 1210 is configured to execute the instructions stored in the storage unit 1220, to enable the apparatus 1200 to implement steps performed by the terminal device in the foregoing method.

Further, the processing unit 1210, the storage unit 1220, and the transceiver unit 1230 may communicate with each other through an internal connection path, to transmit a control signal and/or a data signal. For example, the storage unit 1220 is configured to store a computer program, and the processing unit 1210 may be configured to invoke the computer program from the storage unit 1220 and run the computer program, to control the transceiver unit 1230 to receive a signal and/or send a signal, to complete the steps of the terminal device in the foregoing method. The storage unit 1220 may be integrated into the processing unit 1210, or may be disposed separately from the processing unit 1210.

Optionally, if the apparatus 1200 is a communications device (for example, the master node), the transceiver unit 1230 includes a receiver and a transmitter. The receiver and the transmitter may be a same physical entity or different physical entities. When the receiver and the transmitter are a same physical entity, the receiver and the transmitter may be collectively referred to as a transceiver.

Optionally, if the apparatus 1200 is the chip or the circuit, the transceiver unit 1230 includes an input interface and an output interface.

In an implementation, it may be considered to implement a function of the transceiver unit 1230 by using a transceiver circuit or a dedicated transceiver chip. It may be considered that the processing unit 1210 may be implemented by using a dedicated processing chip, a processing circuit, a processing unit, or a general-purpose chip.

In another implementation, it may be considered that the communications device (for example, the terminal device) provided in this embodiment of this application may be implemented by using a general-purpose computer. That is, program code for implementing functions of the processing unit 1210 and the transceiver unit 1230 is stored in the storage unit 1220, and a general-purpose processing unit implements the functions of the processing unit 1210 and the transceiver unit 1230 by executing the code in the storage unit 1220.

In an implementation, the transceiver unit 1230 is configured to receive first configuration information from a master node MN, where the first configuration information is used to indicate that the terminal device is allowed to report overheating assistance information related to an SN, the first configuration information is determined by the MN based on first information sent by the SN, and the first information is used to indicate that the terminal device is allowed to report overheating assistance information related to the SN.

The transceiver unit 1230 is further configured to report overheating assistance information related to the SN when the terminal device is overheated.

Optionally, the first information or the first configuration information further includes time of a prohibit timer corresponding to overheating assistance information related to the SN.

The prohibit timer is started after the terminal device reports the overheating assistance information related to the SN, and during running of the prohibit timer, the terminal device is prohibited from reporting overheating assistance information related to the SN.

Optionally, the transceiver unit 1230 is further configured to receive second configuration information from the MN, where the second configuration information is used to indicate that the terminal device is not allowed to report overheating assistance information related to the SN, the second configuration information is determined by the MN based on third information sent by the SN, and the third information is used to indicate that the terminal device is not allowed to report overheating assistance information related to the SN.

Optionally, the transceiver unit 1230 is further configured to receive fifth information from the MN, where the fifth information is used to indicate the terminal device to release the first configuration information when the MN releases the SN.

Optionally, the transceiver unit 1230 is further configured to receive third configuration information from the MN, where the third configuration information is used to indicate that the MN releases the SN.

The processing unit 1210 is configured to release the first configuration information after receiving the third configuration information from the MN

Optionally, the transceiver unit 1230 is further configured to receive third configuration information from the MN, where the third configuration information is used to indicate that the MN releases the SN.

The processing unit 1210 is configured to: after receiving the third configuration information from the MN, determine to retain the first configuration information, and stop reporting overheating assistance information related to the SN.

Optionally, after the transceiver unit 1230 receives the third configuration information from the MN, where the third configuration information is used to indicate that the MN releases the SN, the transceiver unit 1230 is further configured to: when the MN adds an SN, report overheating assistance information related to the SN based on the first configuration information when the terminal device is overheated.

Optionally, the overheating assistance information related to the SN includes at least one of a maximum quantity of uplink carriers, a maximum quantity of uplink cells, a maximum quantity of downlink carriers, a maximum quantity of downlink cells, a maximum uplink aggregated bandwidth in a first frequency band, a maximum downlink aggregated bandwidth in the first frequency band, a maximum quantity of uplink MIMO layers of a serving cell on the first frequency band, and a maximum quantity of downlink MIMO layers of a serving cell on the first frequency band that are of the terminal device under the SN.

The quantity of carriers includes a quantity of primary SCG carriers and/or a quantity of secondary carriers, the quantity of cells includes a quantity of primary SCG cells and/or a quantity of secondary cells, and the first frequency band includes a low-frequency FR1 frequency band and/or a high-frequency FR2 frequency band.

In another implementation, the transceiver unit 1230 is configured to receive first configuration information from a master node MN, where the first configuration information is used to indicate that the terminal device is allowed to report, to a secondary node SN, overheating assistance information related to the SN.

The transceiver unit 1230 is further configured to receive fifth information from the MN, where the fifth information is used to indicate the terminal device to release the first configuration information when the MN releases the SN.

In another implementation, the transceiver unit 1230 is configured to receive first configuration information from a master node MN, where the first configuration information is used to indicate that the terminal device is allowed to report, to a secondary node SN, overheating assistance information related to the SN.

The transceiver unit 1230 is further configured to receive third configuration information from the MN, where the third configuration information is used to indicate that the MN releases the SN.

The processing unit 1210 is configured to release the first configuration information after receiving the third configuration information from the MN

In another implementation, the transceiver unit 1230 is configured to receive first configuration information from a master node MN, where the first configuration information is used to indicate that the terminal device is allowed to report, to a secondary node SN, overheating assistance information related to the SN.

The transceiver unit 1230 is configured to receive third configuration information from the MN, where the third configuration information is used to indicate that the MN releases the SN.

The processing unit 1210 is configured to: after receiving the third configuration information from the MN, determine to retain the first configuration information, and stop reporting overheating assistance information related to the SN.

Optionally, after the transceiver unit 1230 receives the third configuration information from the MN, where the third configuration information is used to indicate that the MN releases the SN, the transceiver unit 1230 is further configured to:
when determining that the MN adds an SN, report overheating assistance information related to the SN based on the first configuration information when the terminal device is overheated.

Functions and actions of the modules or units in the apparatus 1200 enumerated above are merely examples for description. When the apparatus 1200 is configured in or is the terminal device, the modules or units in the apparatus 1200 may be configured to perform the actions or processing processes performed by the terminal device in the foregoing method. Herein, to avoid repetition, detailed descriptions thereof are omitted.

For concepts, explanations, detailed description, and other steps of the apparatus 1200 that are related to the technical solutions provided in embodiments of this application, refer to description of the content in the foregoing method or other embodiments. Details are not described herein again.

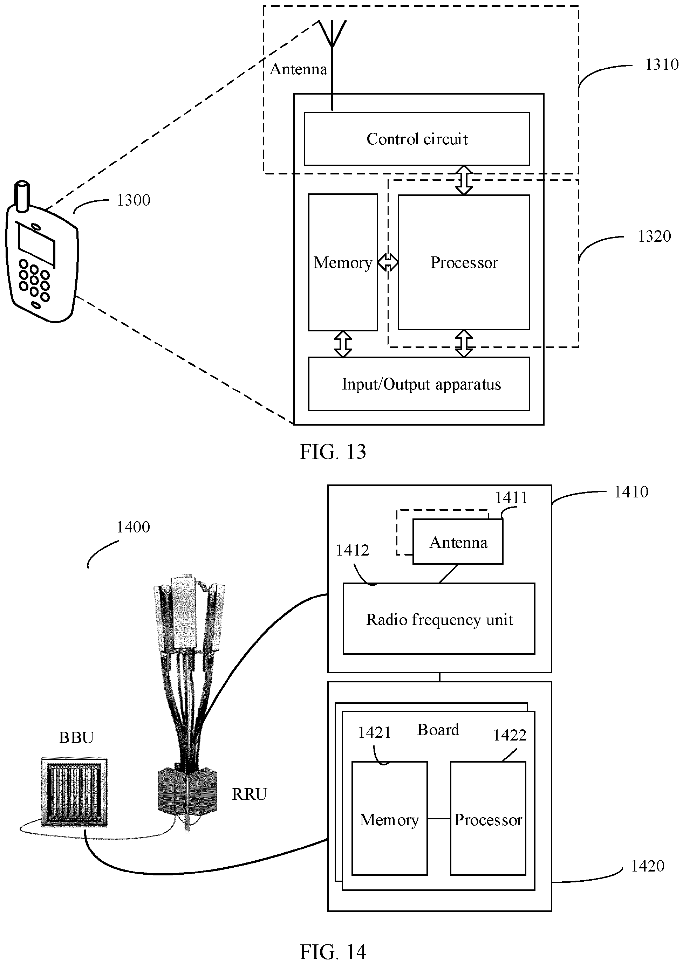

FIG. 13 is a schematic diagram of a structure of a terminal device 1300 according to this application. The terminal device 1300 may perform the actions performed by the terminal device in the foregoing method embodiments.

For ease of description, FIG. 13 shows only main components of the terminal device. As shown in FIG. 13, the terminal device 1300 includes a processor, a memory, a control circuit, an antenna, and an input/output apparatus.

The processor is mainly configured to process a communication protocol and communication data, control the entire terminal device, execute a software program, and process data of the software program, for example, configured to support the terminal device in performing actions described in the foregoing embodiment of the transmission precoding matrix indication method. The memory is mainly configured to: store the software program and the data, for example, store a codebook described in the foregoing embodiment. The control circuit is mainly configured to: perform conversion between a baseband signal and a radio frequency signal, and process the radio frequency signal. A combination of the control circuit and the antenna may also be referred to as a transceiver, mainly configured to send/receive a radio frequency signal in a form of an electromagnetic wave. The input/output apparatus, for example, a touchscreen, a display, a keyboard, is mainly configured to: receive data by a user and output data to the user.

After the terminal device is powered on, the processor may read the software program in the storage unit, interpret and execute instructions of the software program, and process data of the software program. When data needs to be wirelessly sent, after performing baseband processing on the to-be-sent data, the processor outputs a baseband signal to a radio frequency circuit. After performing radio frequency processing on the baseband signal, the radio frequency circuit sends a radio frequency signal in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data and processes the data.

A person skilled in the art may understand that, for ease of description, FIG. 13 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communications protocol and the communications data. The central processing unit is mainly configured to: control the entire terminal device, execute the software program, and process the data of the software program. The processor in FIG. 13 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to improve a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communications protocol and the communication data may be built in the processor, or may be stored in a storage unit in a form of a software program. The processor executes the software program, to implement a baseband processing function.

For example, in this embodiment of this application, the antenna and the control circuit that have a transceiver function may be considered as a transceiver unit 1310 of the terminal device 1300, and the processor having a processing function may be considered as a processing unit 1320 of the terminal device 1300. As shown in FIG. 13, the terminal device 1300 includes the transceiver unit 1310 and the processing unit 1320. The transceiver unit may also be referred to as a transceiver, a transceiver machine, a transceiver apparatus, or the like. Optionally, a component that is in the transceiver unit 1310 and that is configured to implement a receiving function may be considered as a receiving unit, and a component that is in the transceiver unit 1310 and that is configured to implement a sending function may be considered as a sending unit. In other words, the transceiver unit includes the receiving unit and the sending unit. For example, the receiving unit may also be referred to as a receiver machine, a receiver, a receiver circuit, or the like. The sending unit may be referred to as a transmitter machine, a transmitter, a transmitter circuit, or the like.

FIG. 14 is a schematic diagram of a structure of a network device 1400 according to an embodiment of this application. The network device 1400 may be configured to implement a function of the access network device (for example, the master node or the secondary node) in the foregoing method. The network device 1400 may include one or more radio frequency units, such as a remote radio unit (remote radio unit, RRU) 1410 and one or more baseband units (baseband unit, BBU) 1420 (which may also be referred to as a digital unit (digital unit, DU)). The RRU 1410 may be referred to as a transceiver unit, a transceiver machine, a transceiver circuit, a transceiver, or the like. The RRU 1410 may include at least one antenna 1411 and a radio frequency unit 1412. The RRU 1410 part is mainly configured to: send and receive a radio frequency signal and perform conversion between a radio frequency signal and a baseband signal, for example, is configured to send the signaling message described in the foregoing embodiment to a terminal device. The BBU 1420 is mainly configured to perform baseband processing, control a base station, and so on. The RRU 1410 and the BBU 1420 may be physically disposed together, or may be physically disposed separately, namely, in a distributed base station.

The BBU 1420 is a control center of the base station, may also be referred to as a processing unit, and is mainly configured to implement a baseband processing function such as channel encoding, multiplexing, modulation, or spreading. For example, the BBU (the processing unit) 1420 may be configured to control a base station 40 to perform an operation procedure related to the network device in the foregoing method embodiment.

In an example, the BBU 1420 may include one or more boards, and a plurality of boards may jointly support a radio access network (such as an LTE system or a 5G system) of a single access standard, or may separately support radio access networks of different access standards. The BBU 1420 further includes a memory 1421 and a processor 1422. The memory 1421 is configured to store necessary instructions and data. For example, the memory 1421 stores a codebook and the like in the foregoing embodiments. The processor 1422 is configured to control the base station to perform a necessary action, for example, configured to control the base station to perform an operation procedure related to the network device in the foregoing method embodiment. The memory 1421 and the processor 1422 may serve the one or more boards. In other words, the memory and the processor may be disposed on each board. Alternatively, a plurality of boards may share a same memory and a same processor. In addition, a necessary circuit may be further disposed on each board.

In a possible implementation, with development of a system-on-chip (system-on-chip, SoC) technology, all or some functions of the part 1420 and the part 1410 may be implemented by using the SoC technology, for example, implemented through a base station function chip. The base station function chip integrates components such as a processor, a memory, and an antenna interface. A program of a base station-related function is stored in the memory. The processor executes the program to implement the base station-related function. Optionally, the base station function chip can also read an external memory of the chip, to implement a related function of the base station.

It should be understood that the structure of the network device shown in FIG. 14 is merely a possible form, and should not constitute any limitation on the embodiments of this application. This application does not exclude a possibility that a base station structure of another form may appear in the future.

According to the method in embodiments of this application, an embodiment of this application further provides a communications system, including the master node, the secondary node and the terminal device described above.

It should be understood that, the processor in embodiments of this application may be a central processing unit (central processing unit, CPU), or may be another general purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may further be any conventional processor, or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitation, random access memories (random access memories, RAMs) in many forms can be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a wireless communications system, including the foregoing master node, the foregoing secondary node, and the foregoing terminal device.

An embodiment of this application further provides a computer-readable medium that stores a computer program. When the computer program is executed by a computer, steps performed by the master node, steps performed by the secondary node, or steps performed by the terminal device in any one of the foregoing embodiments are implemented.

An embodiment of this application further provides a computer program product. When the computer program product is executed by a computer, steps performed by the master node, steps performed by the secondary node, or steps performed by the terminal device in any one of the foregoing embodiments are implemented.

An embodiment of this application further provides a system chip. The system chip includes a communication unit and a processing unit. The processing unit may be, for example, a processor. The communications unit may be, for example, an input/output interface, a pin, or a circuit. The processing unit may execute computer instructions, so that a chip in the communications apparatus performs steps performed by the master node, steps performed by the secondary node, or steps performed by the terminal device provided in the foregoing embodiments of this application.

Optionally, the computer instructions are stored in a storage unit.

The embodiments in this application may be used independently, or may be used jointly. This is not limited herein.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data.

It should be understood that, in the following embodiments, "first" and "second" are merely intended to distinguish between different objects, and shall not constitute any limitation on this application, and for example, are intended to distinguish between different information and different configuration information.

It should be further understood that the term "and/or" describes an association relationship between associated objects and represents that three relationships may exist. For example, A and/or B may represent the following three cases: Only A exists, both A and B exist, and only B exists. The character "/" usually indicates an "or" relationship between the associated objects. The term "at least one" means one or more. The term "at least one of A and B", similar to the term "A and/or B", describes an association relationship between associated objects and represents that three relationships may exist. For example, at least one of A and B may represent the following three cases: Only A exists, both A and B exist, and only B exists.

A person of ordinary skill in the art may be aware that, in combination with the units and algorithm steps in the examples described in embodiments disclosed in this specification, this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a secondary node SN, first information, wherein the first information is used to indicate that a terminal device is allowed to report overheating assistance information related to the SN; and
sending, by the SN, the first information to a master node MN

2. The method according to claim 1, wherein the first information further comprises time of a prohibit timer corresponding to overheating assistance information related to the SN; and
the prohibit timer is started after the terminal device reports overheating assistance information related to the SN, and during running of the prohibit timer, the terminal device is prohibited from reporting overheating assistance information related to the SN.

3. The method according to claim 1 or 2, wherein before the determining, by a secondary node SN, first information, the method further comprises:
receiving second information from the MN, wherein the second information is used to indicate that the terminal device has a capability of supporting reporting of overheating assistance information related to the SN.

4. The method according to any one of claims 1 to 3, wherein after the sending, by the SN, the first information to a master node MN, the method further comprises:
sending third information to the MN, wherein the third information is used to indicate that the terminal device is not allowed to report overheating assistance information related to the SN.

5. The method according to any one of claims 1 to 4, wherein before the determining, by a secondary node SN, first information, the method further comprises:
receiving fourth information from the MN, wherein the fourth information is used to indicate that the terminal device is allowed to report overheating assistance information related to the SN; and
determining, by the SN, the first information based on the fourth information.

6. A communication method, comprising:
receiving, by a master node MN, first information from a secondary node SN, wherein the first information is used to indicate that a terminal device is allowed to report overheating assistance information related to the SN; and
sending first configuration information to the terminal device based on the first information, wherein the first configuration information is used to indicate that the terminal device is allowed to report, to the SN, overheating assistance information related to the SN.

7. The method according to claim 6, wherein the first information or the first configuration information further comprises time of a prohibit timer corresponding to overheating assistance information related to the SN; and
the prohibit timer is started after the terminal device reports overheating assistance information related to the SN, and during running of the prohibit timer, the terminal device is prohibited from reporting overheating assistance information related to the SN.

8. The method according to claim 6 or 7, wherein before the receiving, by a master node MN, first information from a secondary node SN, the method further comprises:
sending second information to the SN, wherein the second information is used to indicate that the terminal device has a capability of supporting reporting of overheating assistance information related to the SN.

9. The method according to any one of claims 6 to 8, wherein after the receiving, by a master node MN, first information from a secondary node SN, the method further comprises:
receiving third information from the SN, wherein the third information is used to indicate that the terminal device is not allowed to report overheating assistance information related to the SN; and
sending second configuration information to the terminal device based on the third information, wherein the second configuration information is used to indicate that the terminal device is not allowed to report overheating assistance information related to the SN.

10. The method according to any one of claims 6 to 9, wherein before the receiving, by a master node MN, first information from a secondary node SN, the method further comprises:
sending fourth information to the SN, wherein the fourth information is used to indicate that the terminal device is allowed to report overheating assistance information related to the SN.

11. The method according to any one of claims 6 to 10, further comprising:
sending, by the MN, fifth information to the terminal device, wherein the fifth information is used to indicate the terminal device to release the first configuration information when the MN releases the SN.

12. The method according to claim 5 or 10, wherein the SN is a first SN, and the fourth information is determined based on whether a second SN allows the terminal device to report overheating assistance information related to the SN; and the second SN is an SN that has been released before the MN adds the first SN.

13. The method according to claim 5, 10, or 12, wherein the fourth information is further used to indicate time of a prohibit timer corresponding to overheating assistance information related to the SN.

14. The method according to any one of claims 1 to 13, wherein the overheating assistance information related to the SN comprises at least one of a maximum quantity of uplink carriers, a maximum quantity of uplink cells, a maximum quantity of downlink carriers, a maximum quantity of downlink cells, a maximum uplink aggregated bandwidth in a first frequency band, a maximum downlink aggregated bandwidth in the first frequency band, a maximum quantity of uplink MIMO layers of a serving cell on the first frequency band, and a maximum quantity of downlink MIMO layers of a serving cell on the first frequency band that are of the terminal device under the SN; and
the quantity of carriers comprises a quantity of primary SCG carriers and/or a quantity of secondary carriers, the quantity of cells comprises a quantity of primary SCG cells and/or a quantity of secondary cells, and the first frequency band comprises a low-frequency FR1 frequency band and/or a high-frequency FR2 frequency band.

15. A communication method, comprising:
receiving, by a terminal device, first configuration information from a master node MN, wherein the first configuration information is used to indicate that the terminal device is allowed to report overheating assistance information related to an SN, the first configuration information is determined by the MN based on first information sent by the SN, and the first information is used to indicate that the terminal device is allowed to report overheating assistance information related to the SN; and
reporting, by the terminal device, overheating assistance information related to the SN when the terminal device is overheated.

16. The method according to claim 15, wherein the first information or the first configuration information further comprises time of a prohibit timer corresponding to overheating assistance information related to the SN; and
the prohibit timer is started after the terminal device reports the overheating assistance information related to the SN, and during running of the prohibit timer, the terminal device is prohibited from reporting overheating assistance information related to the SN.

17. The method according to claim 15 or 16, further comprising:
receiving second configuration information from the MN, wherein the second configuration information is used to indicate that the terminal device is not allowed to report overheating assistance information related to the SN, the second configuration information is determined by the MN based on third information sent by the SN, and the third information is used to indicate that the terminal device is not allowed to report overheating assistance information related to the SN.

18. The method according to any one of claims 15 to 17, further comprising:
receiving fifth information from the MN, wherein the fifth information is used to indicate the terminal device to release the first configuration information when the MN releases the SN.

19. The method according to any one of claims 15 to 17, further comprising:
receiving third configuration information from the MN, wherein the third configuration information is used to indicate that the MN releases the SN; and
releasing the first configuration information after receiving the third configuration information from the MN; or
after receiving the third configuration information from the MN, determining to retain the first configuration information and stopping reporting overheating assistance information related to the SN.

20. The method according to claim 19, wherein after the third configuration information is received from the MN, wherein the third configuration information is used to indicate that the MN releases the SN, if it is determined to retain the first configuration information and reporting of overheating assistance information related to the SN is stopped, the method further comprises:
when determining that the MN adds an SN, reporting, by the terminal device when the terminal device is overheated, overheating assistance information related to the SN based on the first configuration information.

21. The method according to any one of claims 15 to 20, wherein the overheating assistance information related to the SN comprises at least one of a maximum quantity of uplink carriers, a maximum quantity of uplink cells, a maximum quantity of downlink carriers, a maximum quantity of downlink cells, a maximum uplink aggregated bandwidth in a first frequency band, a maximum downlink aggregated bandwidth in the first frequency band, a maximum quantity of uplink MIMO layers of a serving cell on the first frequency band, and a maximum quantity of downlink MIMO layers of a serving cell on the first frequency band that are of the terminal device under the SN; and
the quantity of carriers comprises a quantity of primary SCG carriers and/or a quantity of secondary carriers, the quantity of cells comprises a quantity of primary SCG cells and/or a quantity of secondary cells, and the first frequency band comprises a low-frequency FR1 frequency band and/or a high-frequency FR2 frequency band.

22. A communication method, comprising:
receiving first configuration information from a master node MN, wherein the first configuration information is used to indicate that a terminal device is allowed to report, to a secondary node SN, overheating assistance information related to the SN; and
receiving fifth information from the MN, wherein the fifth information is used to indicate the terminal device to release the first configuration information when the MN releases the SN.

23. A communication method, comprising:
receiving first configuration information from a master node MN, wherein the first configuration information is used to indicate that a terminal device is allowed to report, to a secondary node SN, overheating assistance information related to the SN;
receiving third configuration information from the MN, wherein the third configuration information is used to indicate that the MN releases the SN; and
releasing the first configuration information after receiving the third configuration information from the MN; or
after receiving the third configuration information from the MN, determining to retain the first configuration information and stopping reporting overheating assistance information related to the SN.

24. The method according to claim 23, wherein after the third configuration information is received from the MN, wherein the third configuration information is used to indicate that the MN releases the SN, if it is determined to retain the first configuration information and reporting of overheating assistance information related to the SN is stopped, the method further comprises:
when determining that the MN adds an SN, reporting, by the terminal device when the terminal device is overheated, overheating assistance information related to the SN based on the first configuration information.

25. A secondary node, comprising a processor and a memory, wherein the memory stores instructions, and when the processor executes the instructions, the apparatus is enabled to perform the method according to any one of claims 1 to 5.

26. A master node, comprising a processor and a memory, wherein the memory stores instructions, and when the processor executes the instructions, the apparatus is enabled to perform the method according to any one of claims 6 to 11.

27. A terminal device, comprising a processor and a memory, wherein the memory stores instructions, and when the processor executes the instructions, the apparatus is enabled to perform the method according to any one of claims 15 to 24.

28. A computer storage medium, configured to store a computer program, wherein the computer program comprises instructions used to perform the method according to any one of claims 1 to 24.

29. A chip, wherein the apparatus comprises:
a processor and a communications interface, wherein the processor is configured to invoke instructions from the communications interface and run the instructions, and when the processor executes the instructions, the method according to any one of claims 1 to 24 is implemented.

30. A wireless communications system, comprising the secondary node according to claim 25, the master node according to claim 26, and the terminal device according to claim 27.
